# EUROPEAN PATENT APPLICATION

(11) **EP 4 776 746 A1**
(43) Date of publication of application: **15.07.2026**
(21) Application number: 23951228.8
(22) Date of filing: 08.09.2023
(51) Int. Cl.: H04W 76/20

(54) **COMMUNICATION METHOD, AND DEVICE AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2023/117872
(87) International publication number: WO 2025/050409

(57) **Abstract**

The embodiments of the present disclosure relate to the technical field of communications. Provided are a communication method, and a device and a storage medium. The method comprises: a Non-AP MLD determining a multi-link operation update request frame under a first condition, wherein the multi-link operation update request frame comprises a first information domain, the first information domain is used for indicating state information of an enhanced multi-link mode of the Non-AP MLD, and the enhanced multi-link mode comprises an enhanced multi-link single radio (EMLSR) mode or an enhanced multi-link multi-radio (EMLMR) mode; and the Non-AP MLD sending the multi-link operation update request frame to an AP MLD. The embodiments of the present disclosure may provide a method for indicating state information of an enhanced multi-link mode.

## Description

### TECHNICAL FIELD

The present disclosure relates to the field of communication technology, and particularly to a communication method, device and storage medium.

### BACKGROUND

To achieve higher throughput, lower network latency, and enhanced reliability, with MLO technology, a non-AP MLD and an AP MLD negotiate the establishment of a plurality of communication links across frequency bands via Multi-Link Setup frames, and then enable the established multi-links through a Traffic-to-link Mapping mechanism.

Considering the limited reception capability of the Non-AP MLD, once the Non-AP ML and the AP MLD have successfully established multi-links and enabled a communication link, they negotiate via EML Operation Mode Notification frames to establish an enhanced multi-link mode and a communication link under this mode. The enhanced multi-link mode includes an Enhanced Multi-Link Single Radio (EMLSR) mode and an Enhanced Multi-Link Multi-Radio (EMLMR) mode.

When the AP MLD enables a new communication link or disables an enabled communication link, the corresponding EMLSR link or EMLMR link for the Non-AP MLD may change, and the Non-AP MLD may update the EMLSR link or EMLMR link. How to further simply the update process and reduce signaling overhead would be further studied.

### SUMMARY

Embodiments of the present disclosure provide a communication method, device and storage medium, which may provide an indication manner for status information of the enhanced multi-link mode.

In a first aspect, the embodiments of the present disclosure provide a communication method, including:
determining, by a Non-AP MLD, a multi-link operation update request frame on a first condition, wherein the multi-link operation update request frame includes a first information field configured to indicate status information of an enhanced multi-link mode of the Non-AP MLD, and the enhanced multi-link mode includes an enhanced multi-link single radio (EMLSR) mode or an enhanced multi-link multi-radio (EMLMR) mode; and
sending, by the Non-AP MLD, the multi-link operation update request frame to an AP MLD.

In a second aspect, the embodiments of the present disclosure provide a communication method, including:
receiving, by an AP MLD, a multi-link operation update request frame, wherein the multi-link operation update request frame includes a first information field configured to indicate status information of an enhanced multi-link mode of a Non-AP MLD, the enhanced multi-link mode includes an EMLSR mode or an EMLMR mode, and the multi-link operation update request frame is determined and sent by the Non-AP MLD on a first condition.

In a third aspect, the embodiments of the present disclosure provide a Non-AP MLD, including:
a processing module, configured to determine a multi-link operation update request frame on a first condition, wherein the multi-link operation update request frame includes a first information field configured to indicate status information of an enhanced multi-link mode of the Non-AP MLD, and the enhanced multi-link mode includes an enhanced multi-link single radio (EMLSR) mode or an enhanced multi-link multi-radio (EMLMR) mode; and
a transceiver module, configured to send the multi-link operation update request frame to an AP MLD.

In a fourth aspect, the embodiments of the present disclosure provide an AP MLD, including:
a transceiver module, configured to receive a multi-link operation update request frame, wherein the multi-link operation update request frame includes a first information field configured to indicate status information of an enhanced multi-link mode of a Non-AP MLD, the enhanced multi-link mode includes an EMLSR mode or an EMLMR mode, and the multi-link operation update request frame is determined and sent by the Non-AP MLD on a first condition.

In a fifth aspect, the embodiments of the present disclosure provide a Non-AP MLD, including one or more processors,
wherein the Non-AP MLD is configured for the communication method according to the first aspect of the embodiments of the present disclosure.

In a sixth aspect, the embodiments of the present disclosure provide an AP MLD, including one or more processors,
wherein the AP MLD is configured for the communication method according to the second aspect of the embodiments of the present disclosure.

In a seventh aspect, the embodiments of the present disclosure provide a storage medium having instructions stored thereon that, when executed on a communication device, cause the communication device to perform the communication method according to the first aspect of the embodiments of the present disclosure.

In an eighth aspect, the embodiments of the present disclosure provide a communication system including a Non-AP MLD and an AP MLD, wherein the Non-AP MLD is configured to perform the method according to the first aspect, and the AP MLD is configured to perform the method according to the second aspect.

The communication method, device and storage medium according to the embodiments of the present disclosure may provide an indication process for status information of the enhanced multi-link mode.

Additional aspects and advantages of the embodiments of the present disclosure will be partially provided in the following description, and will partially become apparent from the following description or be learned through practice of the present disclosure.

### BRIEF DESCRIPTION OF THE DRAWINGS

To more clearly illustrate the technical solutions in the embodiments of the present disclosure, the accompanying drawings for describing the embodiments will be briefly introduced below. Apparently, the following drawings merely represent some embodiments of the present disclosure, and to those skilled in the art, other drawings may be derived from these drawings without creative labor.
FIG. 1 is an architectural schematic diagram of a communication system according to an embodiment of the present disclosure;
FIG. 2 is an interaction schematic diagram of a communication method according to an embodiment of the present disclosure;
FIG. 3 is a first flow diagram of a communication method according to an embodiment of the present disclosure;
FIG. 4 is a second flow diagram of a communication method according to an embodiment of the present disclosure;
FIG. 5 is a third flow diagram of a communication method according to an embodiment of the present disclosure;
FIG. 6 is a fourth flow diagram of a communication method according to an embodiment of the present disclosure;
FIG. 7 is a structural diagram of a Non-AP MLD according to an embodiment of the present disclosure;
FIG. 8 is a structural diagram of an AP MLD according to an embodiment of the present disclosure;
FIG. 9 is a structural diagram of a communication device according to an embodiment of the present disclosure;
FIG. 10 is a structural diagram of a chip according to an embodiment of the present disclosure.

### DETAILED DESCRIPTION

The embodiments of the present disclosure provide a communication method, device, and storage medium.

In a first aspect, the embodiments of the present disclosure provide a communication method, including:
determining, by a Non-AP MLD, a multi-link operation update request frame on a first condition, wherein the multi-link operation update request frame includes a first information field configured to indicate status information of an enhanced multi-link mode of the Non-AP MLD, and the enhanced multi-link mode includes an enhanced multi-link single radio (EMLSR) mode or an enhanced multi-link multi-radio (EMLMR) mode; and
sending, by the Non-AP MLD, the multi-link operation update request frame to an AP MLD.

In the above embodiments, the Non-AP MLD may indicate, on the first condition and with the multi-link operation update request frame, the status information of the EMLSR mode or the EMLMR mode, thereby providing an indication manner for the status information of the multi-link operation mode.

In conjunction with some embodiments of the first aspect, in some embodiments, the first condition includes at least one of:
in a case where the Non-AP MLD operates in the enhanced multi-link mode, a new communication link being enabled between the Non-AP MLD and the AP MLD; or
in a case where the Non-AP MLD operates in the enhanced multi-link mode, at least one enabled communication link of the Non-AP MLD in the enhanced multi-link mode being disabled.

In the above embodiments, in a case where the Non-AP MLD operates in the enhanced multi-link mode, it may send the multi-link operation update request frame when a new communication link is enabled or the enabled communication link in the enhanced multi-link mode is disabled, thereby explicitly defining the condition under which the Non-AP MLD sends the multi-link operation update request frame.

In conjunction with some embodiments of the first aspect, in some embodiments, the method further includes:
when the Non-AP MLD receives, within a transition timeout, a multi-link operation update response frame sent by the AP MLD, or fails to receive the multi-link operation update response frame within the transition timeout, performing, by the Non-AP MLD, a link update for the enhanced multi-link mode.

In the above embodiments, the Non-AP MLD may perform the link update either when the multi-link operation update response frame is received within the transition timeout, or when the multi-link operation update response frame is not received within the transition timeout, thereby explicitly defining the condition under which the Non-AP MLD performs the link update.

In conjunction with some embodiments of the first aspect, in some embodiments, the multi-link operation update response frame includes the first information field, the first information field includes an enhanced multi-link control field, and the enhanced multi-link control field includes an EMLSR mode field and an EMLMR mode field; and
wherein the EMLSR mode field indicates with a first value that the Non-AP MLD operates in the EMLSR mode, and the EMLMR mode field indicates with a second value that the Non-AP MLD operates in the EMLMR mode.

In the above embodiments, the multi-link operation update request frame and the multi-link operation update response frame may jointly indicate, with the EMLSR mode field and the EMLMR mode field within the first information field, the enhanced multi-link mode in which the Non-AP MLD operates, thereby achieving rapid indication of the enhanced multi-link mode in which the Non-AP MLD operates.

In conjunction with some embodiments of the first aspect, in some embodiments, when the Non-AP MLD operates in the EMLSR mode, the enhanced multi-link control field further includes an EMLSR link bitmap field; and when the Non-AP MLD operates in the EMLMR mode, the enhanced multi-link control field further includes an EMLMR link bitmap field;
wherein the EMLSR link bitmap field indicates an EMLSR link when the Non-AP MLD operates in the EMLSR mode, and the EMLMR link bitmap field indicates an EMLMR link when the Non-AP MLD operates in the EMLMR mode.

In the above embodiments, the multi-link operation update request frame and the multi-link operation update response frame may use the EMLSR link bitmap field or the EMLMR link bitmap field within the first information field to achieve rapid indication of the communication link when the Non-AP MLD operates in the corresponding enhanced multi-link mode, thereby enhancing link update efficiency.

In conjunction with some embodiments of the first aspect, in some embodiments, the enhanced multi-link control field further includes an EMLSR parameter update control field or an EMLMR parameter update control field; and
wherein the EMLSR parameter update control field indicates, with a third value, performing EMLSR parameter update, and the EMLMR parameter update control field indicates, with a fourth value, performing EMLMR parameter update.

In the above embodiments, the multi-link operation update request frame and the multi-link operation update response frame may achieve rapid indication for the parameter update of the respective enhanced multi-link mode operation through the EMLSR parameter update control field or the EMLMR parameter update control field within the first information field.

In conjunction with some embodiments of the first aspect, in some embodiments, when the EMLSR parameter update control field indicates performing the EMLSR parameter update, the multi-link operation update request frame and the multi-link operation update response frame further include a second information field configured to indicate an EMLSR parameter to be updated; and
when the EMLMR parameter update control field indicates performing the EMLMR parameter update, the multi-link operation update request frame and the multi-link operation update response frame further include a third information field configured to indicate an EMLMR parameter to be updated.

In the above embodiments, the multi-link operation update request frame and the multi-link operation update response frame may rapidly and conveniently indicate, with the second information field or the third information field, the EMLSR parameter or EMLMR parameter to be updated, thereby enhancing parameter update efficiency.

In conjunction with some embodiments of the first aspect, in some embodiments, the EMLSR parameter to be updated includes at least one of:
a minimum media access control padding delay of an initial frame in the EMLSR mode; or
a minimum delay for an EMLSR link to transition from a frame exchange state to a monitoring state in the EMLSR mode,
wherein the second information field indicates, with a third information sub-field, the minimum media access control padding delay of the initial frame in the EMLSR mode, and indicates, with a fourth information sub-field, the minimum delay for the EMLSR link to transition from the frame exchange state to the monitoring state in the EMLSR mode;
the EMLMR parameter to be updated includes at least one of:
   a minimum media access control padding delay of an initial frame in the EMLMR mode; or
   a minimum delay for an EMLMR link to transition from a frame exchange state to a monitoring state in the EMLMR mode,
   wherein the third information field indicates, with a first information sub-field, the minimum media access control padding delay of the initial frame in the EMLMR mode, and indicates, with a second information sub-field, the minimum delay for the EMLMR link to transition from the frame exchange state to the monitoring state in the EMLMR mode.

In the above embodiments, the multi-link operation update request frame and multi-link operation update response frame may rapidly and conveniently indicate, with the information sub-field within the second or third information field, a specific EMLSR or EMLMR parameter to be updated, thereby enhancing parameter update efficiency.

In conjunction with some embodiments of the first aspect, in some embodiments, performing, by the Non-AP MLD, the link update for the enhanced multi-link mode incudes:
when the Non-AP MLD operates in the EMLSR mode, performing, by the Non-AP MLD, an EMLSR link update based on the EMLSR link indicated by the EMLSR link bitmap field; and
when the Non-AP MLD operates in the EMLMR mode, performing, by the Non-AP MLD, an EMLMR link update based on the EMLMR link indicated by the EMLMR link bitmap field.

In the above embodiments, the Non-AP MLD may perform the EMLSR link update based on the EMLSR link indicated by the EMLSR link bitmap indication field and perform the EMLMR link update based on the EMLMR link indicated by the EMLMR link bitmap field, thereby enhancing link update efficiency.

In conjunction with some embodiments of the first aspect, in some embodiments, the above method further includes:
when the enhanced multi-link control field includes the EMLSR parameter update control field, and the EMLSR parameter update control field indicates, with the third value, performing the EMLSR parameter update, performing, by the Non-AP MLD, the EMLSR parameter update; and
when the enhanced multi-link control field includes the EMLMR parameter update control field, and the EMLMR parameter update control field indicates, with the fourth value, performing the EMLMR parameter update, performing, by the Non-AP MLD, the EMLMR parameter update.

In the above embodiments, the Non-AP MLD may perform the EMLSR parameter update when the EMLSR parameter update control field indicates performing the EMLSR parameter update, and perform the EMLMR parameter update when the EMLMR parameter update control field indicates performing the EMLMR parameter update, which provides a manner for indicating the Non-AP MLD to perform the EMLSR or EMLMR parameter update, and clearly defines the timing for the Non-AP MLD to perform the EMLSR or EMLMR parameter update.

In conjunction with some embodiments of the first aspect, in some embodiments, the above method further includes:
when the multi-link operation update response frame includes the second information field, performing, by the Non-AP MLD, the EMLSR parameter update based on the EMLSR parameter to be updated; and
when the multi-link operation update response frame includes the third information field, performing, by the Non-AP MLD, the EMLMR parameter update based on the EMLMR parameter to be updated.

In the above embodiments, the Non-AP MLD may perform the EMLSR parameter update based on the EMLSR parameter to be updated indicated by the second information field, or may perform the EMLMR parameter update based on the EMLMR parameter to be updated indicated by the third information field, which enhances the accuracy and efficiency of the parameter update.

In a second aspect, the embodiments of the present disclosure provide a communication method including:
in a case where the Non-AP MLD operates in the enhanced multi-link mode, a new communication link being enabled between the Non-AP MLD and the AP MLD; or
in a case where the Non-AP MLD operates in the enhanced multi-link mode, at least one enabled communication link of the Non-AP MLD in the enhanced multi-link mode being disabled.

In the above embodiments, the AP MLD may determine the status information of the EMLSR mode or the EMLMR mode indicated with the multi-link operation update request frame by the Non-AP MLD on the first condition, thereby providing a manner for acquiring the status information of the multi-link operation mode.

In conjunction with some embodiments of the second aspect, in some embodiments, the first condition includes at least one of:
in a case where the Non-AP MLD operates in the enhanced multi-link mode, a new communication link being enabled between the Non-AP MLD and the AP MLD; or
in a case where the Non-AP MLD operates in the enhanced multi-link mode, at least one enabled communication link of the Non-AP MLD in the enhanced multi-link mode being disabled.

In the above embodiments, in a case where the Non-AP MLD operates in the enhanced multi-link mode, it may send the multi-link operation update request frame when a new communication link is enabled or the enabled communication link in the enhanced multi-link mode is disabled, thereby explicitly defining the condition under which the Non-AP MLD sends the multi-link operation update request frame.

In conjunction with some embodiments of the second aspect, in some embodiments, the above method further includes:
sending, by the AP MLD, a multi-link operation update response frame to the Non-AP MLD within a transition timeout; or
not sending, by the AP MLD, the multi-link operation update response frame within the transition timeout.

In the above embodiments, the AP MLD may send the multi-link operation update response frame to the Non-AP MLD within the transition timeout or may not send the multi-link operation update response frame within the transition timeout, which may provide a manner for the AP MLD to respond to the multi-link operation update request frame.

In conjunction with some embodiments of the second aspect, in some embodiments, the multi-link operation update response frame includes the first information field, the first information field includes an enhanced multi-link control field, and the enhanced multi-link control field includes an EMLSR mode field and an EMLSR mode field; and
wherein the EMLSR mode field indicates with a first value that the Non-AP MLD operates in the EMLSR mode, and the EMLMR mode field indicates with a second value that the Non-AP MLD operates in the EMLMR mode.

In the above embodiments, the multi-link operation update request frame and the multi-link operation update response frame may jointly indicate, with the EMLSR mode field and the EMLMR mode field within the first information field, the enhanced multi-link mode in which the Non-AP MLD operates, thereby achieving rapid indication of the enhanced multi-link mode in which the Non-AP MLD operates.

In conjunction with some embodiments of the second aspect, in some embodiments, when the Non-AP MLD operates in the EMLSR mode, the enhanced multi-link control field further includes an EMLSR link bitmap field; and when the Non-AP MLD operates in the EMLMR mode, the enhanced multi-link control field further includes an EMLMR link bitmap field;
wherein the EMLSR link bitmap field indicates an EMLSR link when the Non-AP MLD operates in the EMLSR mode, and the EMLMR link bitmap field indicates an EMLMR link when the Non-AP MLD operates in the EMLMR mode.

In the above embodiments, the multi-link operation update request frame and the multi-link operation update response frame may use the EMLSR link bitmap field or the EMLMR link bitmap field within the first information field to achieve rapid indication of the communication link when the Non-AP MLD operates in the corresponding enhanced multi-link mode, thereby enhancing link update efficiency.

In conjunction with some embodiments of the second aspect, in some embodiments, the enhanced multi-link control field further includes an EMLSR parameter update control field or an EMLMR parameter update control field; and
wherein the EMLSR parameter update control field indicates, with a third value, performing EMLSR parameter update, and the EMLMR parameter update control field indicates, with a fourth value, performing EMLMR parameter update.

In the above embodiments, the multi-link operation update request frame and the multi-link operation update response frame may achieve rapid indication for the parameter update of the respective enhanced multi-link mode operation through the EMLSR parameter update control field or the EMLMR parameter update control field within the first information field.

In conjunction with some embodiments of the second aspect, in some embodiments, when the EMLSR parameter update control field indicates performing the EMLSR parameter update, the multi-link operation update request frame and the multi-link operation update response frame further include a second information field configured to indicate an EMLSR parameter to be updated; and
when the EMLMR parameter update control field indicates performing the EMLMR parameter update, the multi-link operation update request frame and the multi-link operation update response frame further include a third information field configured to indicate an EMLMR parameter to be updated.

In the above embodiments, the multi-link operation update request frame and the multi-link operation update response frame may rapidly and conveniently indicate, with the second information field or the third information field, the EMLSR parameter or EMLMR parameter to be updated, thereby enhancing parameter update efficiency.

In conjunction with some embodiments of the second aspect, in some embodiments, the EMLSR parameter to be updated includes at least one of:
a minimum media access control padding delay of an initial frame in the EMLSR mode; or
a minimum delay for an EMLSR link to transition from a frame exchange state to a monitoring state in the EMLSR mode,
wherein the second information field indicates, with a third information sub-field, the minimum media access control padding delay of the initial frame in the EMLSR mode, and indicates, with a fourth information sub-field, the minimum delay for the EMLSR link to transition from the frame exchange state to the monitoring state in the EMLSR mode;
the EMLMR parameter to be updated includes at least one of:
   a minimum media access control padding delay of an initial frame in the EMLMR mode; or
   a minimum delay for an EMLMR link to transition from a frame exchange state to a monitoring state in the EMLMR mode,
   wherein the third information field indicates, with a first information sub-field, the minimum media access control padding delay of the initial frame in the EMLMR mode, and indicates, with a second information sub-field, the minimum delay for the EMLMR link to transition from the frame exchange state to the monitoring state in the EMLMR mode.

In the above embodiments, the multi-link operation update request frame and the multi-link operation update response frame may rapidly and conveniently indicate, using the information sub-field within the second or third information field, a specific EMLSR or EMLMR parameter to be updated, thereby enhancing parameter update efficiency.

In a third aspect, the embodiments of the present disclosure provide a Non-AP MLD, including:
a processing module, configured to determine a multi-link operation update request frame on a first condition, wherein the multi-link operation update request frame includes a first information field configured to indicate status information of an enhanced multi-link mode of the Non-AP MLD, and the enhanced multi-link mode includes an enhanced multi-link single radio (EMLSR) mode or an enhanced multi-link multi-radio (EMLMR) mode; and
a transceiver module, configured to send the multi-link operation update request frame to an AP MLD.

In a fourth aspect, the embodiments of the present disclosure provide an AP MLD, including:
a transceiver module, configured to receive a multi-link operation update request frame, wherein the multi-link operation update request frame includes a first information field configured to indicate status information of an enhanced multi-link mode of a Non-AP MLD, the enhanced multi-link mode includes an EMLSR mode or an EMLMR mode, and the multi-link operation update request frame is determined and sent by the Non-AP MLD on a first condition.

In a fifth aspect, the embodiments of the present disclosure provide a Non-AP MLD, including one or more processors,
wherein the Non-AP MLD is configured to perform the communication method according to the first aspect and an optional implementation of the first aspect.

In a sixth aspect, the embodiments of the present disclosure provide an AP MLD, including one or more processors,
wherein the AP MLD is configured to perform the communication method according to the second aspect and an optional implementation of the second aspect.

In a seventh aspect, the embodiments of the present disclosure provide a communication device including one or more processors;
wherein the communication device may operate as a Non-AP MLD to perform the communication method according to the first aspect and an optional implementation of the first aspect, and may operate as an AP MLD to perform the communication method according to the second aspect and an optional implementation of the second aspect.

In an eighth aspect, the embodiments of the present disclosure provide a storage medium having instructions stored thereon that, when executed on a communication device, cause the communication device to perform the method according to the first aspect, the second aspect, an optional embodiment of the first aspect, and an optional embodiment of the second aspect.

In a ninth aspect, the embodiments of the present disclosure provide a program product that, when executed by a communication device, causes the communication device to perform the method according to the first aspect, the second aspect, an optional embodiment of the first aspect, and an optional embodiment of the second aspect.

In a tenth aspect, the embodiments of the present disclosure provide a computer program that, when executed on a computer, causes the computer to perform the method according to the first aspect, the second aspect, an optional embodiment of the first aspect, and an optional embodiment of the second aspect.

In an eleventh aspect, the embodiments of the present disclosure provide a chip or chip system. The chip or chip system includes a processing circuit configured to perform the method according to the first aspect, the second aspect, an optional embodiment of the first aspect, and an optional embodiment of the second aspect.

In a twelfth aspect, the embodiments of the present disclosure provide a communication system including an AP MLD and a Non-AP MLD, and the Non-AP MLD is configured to perform the method according to the first aspect and an optional implementation of the first aspect, and the AP MLD is configured to perform the method according to the second aspect and an optional implementation of the second aspect.

It may be understood that the Non-AP MLD, AP MLD, communication system, communication device, storage medium, program product, computer program, chip, or chip system are all employed to execute the method provided by the embodiments of the present disclosure. Consequently, the achieved beneficial effects thereof may refer to the beneficial effects of the corresponding method, which are not repeated herein.

The embodiments of the present disclosure provide a communication method, device and storage medium. In some embodiments, the terms such as communication method, method for processing information, and method for communication may be used interchangeably, and the terms such as communication device and information processing device may be used interchangeably.

The embodiments of the present disclosure are not exhaustive but merely illustrate some embodiments, which do not constitute specific limitations on the protection scope of the present disclosure. If there is no contradiction, each step within an embodiment may be implemented as an independent embodiment, and various steps therein may be arbitrarily combined. For example, a solution in an embodiment with some steps removed may be implemented as an independent embodiment, and steps in an embodiment may be arbitrarily exchanged in sequence. Furthermore, optional implementations in an embodiment may be arbitrarily combined. Moreover, various embodiments may be arbitrarily combined. For example, part or all steps from different embodiments may be arbitrarily combined, and an embodiment may be arbitrarily combined with an optional implementation from another embodiment.

In the embodiments of the present disclosure, unless otherwise specified or logically conflicting, the terms and/or descriptions remain consistent across the embodiments and may be cross-referenced. Technical features from different embodiments may be combined to form a new embodiment based on inherent logical relationships thereof.

The term employed in the embodiments of the present disclosure serves solely to describe specific embodiments and shall not be construed as limiting the scope of the present disclosure.

In the embodiments of the present disclosure, unless otherwise specified, the singular form for describing an element, such as "a", "an", "the", "the above", "said", "the foregoing", "this", etc., may denote "one and only one", "one or more", "at least one", etc. For example, where articles such as "a", "an", or "the" are employed in translation, the noun following such article may be understood as either singular or plural.

In the embodiments of the present disclosure, "a plurality of" denotes two or more.

In some embodiments, terms such as "at least one of", "one or more", "a plurality of", and "multiple" may be used interchangeably.

In some embodiments, depending on the content, the expressions such as "at least one of A or B", "A and/or B", "A in one case, B in another case", or "in response to a case A, in response to another case B" may include the following technical solutions: in some embodiments, A (A is executed independently of B); in some embodiments, B (B is executed independently of A); in some embodiments, selection from A and B to be executed (A and B are selectively executed); and in some embodiments, A and B (both A and B are executed). When there are more elements such as A, B, C, etc., a similar principle applies.

In some embodiments, depending on the context, the expression such as "A or B" may include the following technical solutions: in some embodiments, A (A is executed independently of B); in some embodiments, B (B is executed independently of A); and in some embodiments, selection from A and B to be executed (A and B are selectively executed). When there are more elements such as A, B, C, etc., a similar principle applies.

In some embodiments of the present disclosure, the prefixes such as "first", "second" serve solely to distinguish different described objects, and do not impose any restrictions on the position, sequence, priority, quantity, or content of a described object. The statements regarding the described objects should be understood in the context of claims or embodiments, and the prefixes should not be construed as imposing additional limitations. For example, when the described object is "field", the ordinal numbers preceding "field" in "first field" and "second field" do not restrict the positional relationship or sequence between the fields, and "first" and "second" do not limit whether the fields they modify reside within the same message, nor do they limit the chronological order between "first field" and "second field". Similarly, when the described object is "level", the ordinal numbers preceding "level" in "first level" and "second level" do not restrict the priority between levels. Furthermore, the quantity of the described object is not limited by the ordinal number, and it may be one or more. Taking "first device" as an example, the quantity of "devices" may be one or more. Furthermore, the objects modified by different prefixes may be the same or different. For example, when the described object is "device", "first device" and "second device" may be the same device or different devices, and the types thereof may be the same or different. For another example, when the described object is "information", "first information" and "second information" may be the same information or different information, and the contents thereof may be the same or different.

In some embodiments, the expressions such as "including A", "containing A", "for indicating A", and "carrying A" may be interpreted as either directly carrying A or indirectly indicating A.

In some embodiments, the terms such as "in response to...", "in response to determining...", "in the case of...", "at the time of...", "when...", and "if..." may be used interchangeably.

In some embodiments, the terms such as "greater than", "greater than or equal to", "not less than", "more than", "more than or equal to", "not fewer than", "higher than", "higher than or equal to", "not lower than" and "above" may be used interchangeably, and the terms such as "less than", "less than or equal to", "not greater than", "fewer than", "fewer than or equal to", "not more than", "lower than, "lower than or equal to", "not higher than" and "below" may be used interchangeably.

In some embodiments, the acquisition of data, information, etc., may comply with the laws and regulations of the local country.

In some embodiments, data, information, etc., may be acquired after the agreement of user.

Furthermore, each element, row, or column in a table in an embodiment of the present disclosure may be implemented as an independent embodiment, and any combination of elements, rows, or columns may also be implemented as an independent embodiment.

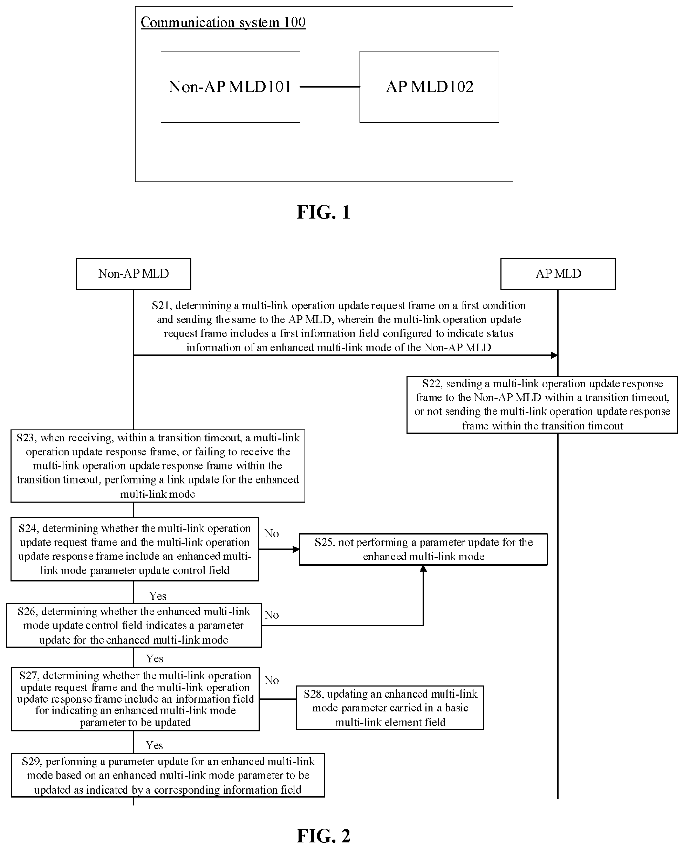

FIG. 1 is an architectural diagram of a communication system according to an embodiment of the present disclosure.

As shown in FIG. 1, the communication system 100 includes a Non-AP MLD 101 and an AP MLD 102.

The Non-AP MLD 101 and AP MLD 102 support Multi-Link Operation (MLO) technology. To achieve higher throughput, lower network latency, and enhanced reliability, with the MLO technology, the non-AP MLD 101 and the AP MLD 102 negotiate the establishment of a plurality of communication links across frequency bands via Multi-Link Setup frames, and then enable the established multi-links through a Traffic-to-link Mapping mechanism.

In some embodiments, each affiliated AP of AP MLD 102 functions as a bridge connecting wired and wireless networks, and is mainly used to interconnect various wireless network clients, and then to connect the wireless network to the Ethernet. Specifically, each affiliated AP of AP MLD 102 may be a terminal device or network device provided with a wireless fidelity chip.

In some embodiments, each affiliated STA of the Non-AP MLD 101 includes a device including a wireless communication chip supporting WiFi communication function, a wireless sensor, or a wireless communication terminal. Optionally, the wireless communication terminal may be at least one of, for example, a mobile phone, a wearable device, an IoT device supporting WiFi communication function, a vehicle with WiFi communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving application, a wireless terminal device in remote medical surgery, a wireless terminal device in smart grid, a wireless terminal device in transportation safety, a wireless terminal device in smart cities, or a wireless terminal devices in smart homes, among others, but not limited thereto.

Considering the limited reception capability of the Non-AP MLD 101, once the Non-AP ML 101 and the AP MLD 102 have successfully established multi-links and enabled a communication link, they negotiate via EML Operation Mode Notification frames to establish an enhanced multi-link mode and a communication link under this mode.

The enhanced multi-link mode includes the Enhanced Multi-Link Single Radio (EMLSR) mode and the Enhanced Multi-Link Multi-Radio (EMLMR) mode.

Upon entering an active or wake-up state, an STA affiliating to the Non-AP MLD 101 and operating on an EMLSR or EMLMR link performs channel monitoring operation and receives initial control frames sent by the AP MLD 101 in an Orthogonal Frequency Division Multiplexing (OFDM) PPDU type and non-high throughput rate repetitive PPDU type.

When the AP MLD 102 enables a new communication link or disables an enabled communication link, the corresponding EMLSR link or EMLMR link for the Non-AP MLD 101 may change. For example, when a new communication link is enabled, the STA affiliating to the Non-AP MLD 101 and corresponding to the new enabled communication link may intend to operate in the EMLSR or EMLMR mode; or when one communication link in the EMLSR or EMLMR link become disabled, the Non-AP MLD 101 may also update the EMLSR or EMLMR link. Under the existing mechanism, the Non-AP MLD 101 and the AP MLD 102 negotiate the EMLSR or EMLMR link via EML Operation Notification frames each time a new communication link is enabled or an enabled link becomes disabled. This manner not only incurs additional signaling overhead but also impacts transmission efficiency.

It shall be understood that the communication system described in the embodiments of the present disclosure is intended to illustrate the technical solutions of the embodiments of the present disclosure more clearly and does not constitute limitations on the technical solutions provided by the embodiments of the present disclosure. A person skilled in the art may appreciate that, with the evolution of system architecture and the emergence of new service scenario, the technical solutions provided by the embodiments of the present disclosure are equally applicable to similar technical problems.

The following embodiments of the present disclosure may be applied to the communication system 100 shown in FIG. 1, or part of entities thereof, the present disclosure is not limited thereto. The entities in FIG. 1 are illustrative. The communication system may include all or part of the entities shown in FIG. 1, or may include other entities than those shown in FIG. 1. The number and configuration of entities are arbitrary. The entities may be physical or virtual. The links between entities are illustrative. The entities may be linked or not linked, and the link may be in any manner - they may be linked directly or indirectly, via wired or wireless means.

The embodiments of the present disclosure may be applied to a wireless local area network (WLAN), for example, may be applied to IEEE 802.11 system standards, including but not limited to 802.11a/b/g standard, 802.11n standard, 802.11ac standard, 802.11ax standard, or next generation standard thereof, such as 802.11bn, 802.11bf, 802.11be standard also known as Wi-Fi7 or extremely high-throughput (EHT) standard, or further-next generation standard. Alternatively, the embodiments of the present disclosure may also be applied to a wireless local area network system such as internet of things (IoT) network or vehicle-to-everything (V2X) networks. Of course, the embodiments of the present disclosure may also be applied to other potential communication systems, such as Long Term Evolution (LTE) system, LTE Frequency Division Duplex (FDD) system, LTE Time Division Duplex (TDD), Universal Mobile Telecommunication System (UMTS), Worldwide Interoperability for Microwave Access (WiMAX) communication systems, and future fifth-generation (5th generation, 5G) communication system.

To address the above problems, the technical solutions in the embodiments of the present disclosure will be described clearly and fully below with reference to the accompanying drawings. Obviously, the embodiments described herein represent only some embodiments of the present disclosure and are not all the embodiments of the present disclosure. All other embodiments obtained by a person skilled in the art based on the embodiments of the present disclosure without creative labor fall within the protection scope of the present disclosure.

FIG. 2 is an interaction diagram of a communication method according to an embodiment of the present disclosure. The communication method shown in FIG. 2 includes the following steps.

In step S21, a Non-AP MLD determines a multi-link operation update request frame on a first condition and sends the same to an AP MLD, wherein the multi-link operation update request frame includes a first information field configured to indicate status information of an enhanced multi-link mode of the Non-AP MLD.

In some embodiments, the enhanced multi-link mode includes an enhanced multi-link single radio (EMLSR) mode or an enhanced multi-link multi-radio (EMLMR) mode;

In some embodiments, the first condition includes at least one of:
in a case where the Non-AP MLD operates in the enhanced multi-link mode, a new communication link being enabled between the Non-AP MLD and the AP MLD; or
in a case where the Non-AP MLD operates in the enhanced multi-link mode, at least one enabled communication link of the Non-AP MLD in the enhanced multi-link mode being disabled.

As an example, when the Non-AP MLD operates in the EMLSR mode or EMLMR mode, and a new communication link is enabled between the Non-AP MLD and the AP MLD, the Non-AP MLD determines the multi-link operation update request frame.

As an example, when the Non-AP MLD operates in the EMLSR mode, and at least one enabled EMLSR link of the Non-AP MLD in the EMLSR mode is disabled, the Non-AP MLD determines the multi-link operation update request frame.

As an example, when the Non-AP MLD operates in the EMLMR mode, and at least one enabled EMLMR link of the Non-AP MLD in the EMLMR mode is disabled, the Non-AP MLD determines the multi-link operation update request frame.

In some embodiments, the multi-link operation update response frame includes the first information field, the first information field includes an enhanced multi-link control (EML Control) field, and the enhanced multi-link control field includes an EMLSR mode field and an EMLMR mode field.

The EMLSR mode field indicates with a first value that the Non-AP MLD operates in the EMLSR mode, and indicates with another value that the Non-AP MLD does not operate in the EMLSR mode.

The first value may be 1, which is not limited herein.

The EMLMR mode field indicates with a second value that the Non-AP MLD operates in the EMLMR mode, and indicates with another value that the Non-AP MLD does not operate in the EMLMR mode.

The second value may be 1, which is not limited herein.

As an example, the first information field includes an enhanced multi-link control field, which includes an EMLSR mode field and an EMLMR mode field. When the EMLSR mode field has an identifier value of 1 and the EMLMR mode field has an identifier value of 0, this indicates that the Non-AP MLD operates in the EMLSR mode; and when the EMLSR mode field has an identifier value of 0 and the EMLMR mode field has an identifier value of 1, this indicates that the Non-AP MLD operates in the EMLMR mode.

In some embodiments, when the Non-AP MLD operates in the EMLSR mode, the enhanced multi-link control field further includes an EMLSR link bitmap field; and when the Non-AP MLD operates in the EMLMR mode, the enhanced multi-link control field further includes an EMLMR link bitmap field.

The EMLSR link bitmap field indicates an EMLSR link when the Non-AP MLD operates in the EMLSR mode, and the EMLMR link bitmap field indicates an EMLMR link when the Non-AP MLD operates in the EMLMR mode.

As an example, the Non-AP MLD determines a multi-link operation update request frame on a first condition. The multi-link operation update request frame includes a first information field, and the first information field includes an enhanced multi-link control field. The enhanced multi-link control field includes an EMLSR mode field and an EMLMR mode field.

When the identifier value of the EMLSR mode field is 1 and the identifier value of the EMLMR mode field is 0, this indicates that the Non-AP MLD operates in the EMLSR mode. At this time, the enhanced multi-link control field further includes an EMLSR link bitmap field, which indicates an EMLSR link when the Non-AP MLD operates in the EMLSR mode.

When the identifier value of the EMLMR mode field is 0 and the identifier value of the EMLMR mode field is 1, this indicates that the Non-AP MLD operates in the EMLMR mode. At this time, the enhanced multi-link control field further includes an EMLMR link bitmap field, which indicates an EMLMR link when the Non-AP MLD operates in the EMLMR mode.

In some embodiments, the enhanced multi-link control field further includes an EMLSR parameter update control field or an EMLMR parameter update control field.

The EMLSR parameter update control field indicates, with a third value, performing EMLSR parameter update, that is, indicating updating the EMLSR parameter carried in a Basic Multi-Link element field during the association process of the Non-AP MLD and the AP MLD.

The EMLMR parameter update control field indicates, with a fourth value, performing EMLMR parameter update, that is, indicating updating the EMLMR parameter carried in a Basic Multi-Link element field during the association process of the Non-AP MLD and the AP MLD.

The third and fourth values may be set to 1, which is not limited herein.

As an example, when the Non-AP MLD operates in the EMLSR mode, the multi-link operation update request frame includes a first information field. The first information field includes an enhanced multi-link control field, and the enhanced multi-link control field includes an EMLSR parameter update control field. When the identifier value of the EMLSR parameter update control field is the third value, it indicates performing the EMLSR parameter update, i.e., requests to perform the EMLSR parameter update.

As an example, when the Non-AP MLD operates in the EMLMR mode, the multi-link operation update request frame includes a first information field. The first information field includes an enhanced multi-link control field, and the enhanced multi-link control field includes an EMLMR parameter update control field. When the identifier value of the EMLMR parameter update control field is the fourth value, it indicates performing the EMLMR parameter update, i.e., requests to perform the EMLMR parameter update.

In some embodiments, when the enhanced multi-link control field includes an EMLSR parameter update control field and the EMLSR parameter update control field indicates performing the EMLSR parameter update, the multi-link operation update request frame further includes a second information field configured to indicate an EMLSR parameter to be updated.

When the enhanced multi-link control field includes an EMLMR parameter update control field and the EMLMR parameter update control field indicates performing the EMLMR parameter update, the multi-link operation update request frame further includes a third information field configured to indicate an EMLMR parameter to be updated

Optionally, the EMLSR parameter to be updated includes at least one of:
a minimum media access control (MAC) padding delay of an initial frame in the EMLSR mode; or
a minimum delay for an EMLSR link to transition from a frame exchange state to a monitoring state in the EMLSR mode.

The second information field includes at least one of a third information sub-field or a fourth information sub-field, the third information sub-field indicates the minimum MAC padding delay of the initial frame in the EMLSR mode, and the fourth information sub-field indicates the minimum delay for the EMLSR link to transition from the frame exchange state to the monitoring state in the EMLSR mode.

The minimum MAC padding delay of the initial frame in the EMLSR mode may refer to an EMLSR padding delay, and the minimum delay for the EMLSR link to transition from the frame exchange state to the monitoring state in the EMLSR mode may refer to an EMLSR transition delay.

Optionally, the EMLMR parameter to be updated includes at least one of:
a minimum media access control (MAC) padding delay of an initial frame in the EMLMR mode; or
a minimum delay for an EMLMR link to transition from a frame exchange state to a monitoring state in the EMLMR mode.

The third information field includes at least one of a first information sub-field or a second information sub-field, the first information sub-field indicates the minimum MAC padding delay of the initial frame in the EMLMR mode, and the second information sub-field indicates the minimum delay for the EMLMR link to transition from the frame exchange state to the monitoring state in the EMLMR mode.

The minimum MAC padding delay of the initial frame in the EMLMR mode may refer to an EMLMR padding delay, and the minimum delay for the EMLMR link to transition from the frame exchange state to the monitoring state in the EMLMR mode may refer to an EMLMR transition delay.

In step S22, the AP MLD sends a multi-link operation update response frame to the Non-AP MLD within a transition timeout, or does not send the multi-link operation update response frame within the transition timeout.

In some embodiments, the AP MLD sends the multi-link operation update response frame to the Non-AP MLD within the transition timeout, and the multi-link operation update response frame does not include the first information field.

Herein, the transition timeout is indicated by a transition timeout field when the Non-AP MLD and the AP MLD establish an association. A message frame during the association process between the Non-AP MLD and the AP MLD includes a Basic Multi-Link element field, the Basic Multi-Link element field includes an EML Capabilities field, and the EML Capabilities field includes the Transition Timeout field.

In some embodiments, the AP MLD does not send the multi-link operation update response frame within the transition timeout.

In some embodiments, the AP MLD sends the multi-link operation update response frame to the Non-AP MLD within the transition timeout, and the multi-link operation update response frame includes the first information field.

When the first information field of the multi-link operation update request frame includes an enhanced multi-link control (EML Control) field, the first information field of the multi-link operation update response frame may include an enhanced multi-link control field.

As an example, the first information field in the multi-link operation update response frame may include an enhanced multi-link control field, and the enhanced multi-link control field may include an EMLSR mode field and an EMLMR mode field.

As an example, when the first information field in the multi-link operation update response frame may include an enhanced multi-link control field, and the Non-AP MLD operates in the EMLSR mode, the enhanced multi-link control field may include an EMLSR link bitmap field.

As an example, when the first information field in the multi-link operation update response frame may include an enhanced multi-link control field, and the Non-AP MLD operates in the EMLMR mode, the enhanced multi-link control field may include an EMLMR link bitmap field.

As an example, the first information field in the multi-link operation update response frame may include an enhanced multi-link control field, and the enhanced multi-link control field may include an EMLSR parameter update control field.

As an example, the first information field in the multi-link operation update response frame may include an enhanced multi-link control field, and the enhanced multi-link control field may include an EMLMR parameter update control field.

As an example, the multi-link operation update response frame may further include a second information field. That is, when the first information field in the multi-link operation update response frame includes an enhanced multi-link control field, and the enhanced multi-link control field includes an EMLSR parameter update control field, and when the EMLSR parameter update control field indicates performing EMLSR parameter update, the multi-link operation update response frame further includes a second information field to indicate the EMLSR parameter to be updated.

As an example, the multi-link operation update response frame may further include a third information field. That is, when the first information field in the multi-link operation update response frame includes an enhanced multi-link control field, and the enhanced multi-link control field includes an EMLMR parameter update control field, and when the EMLMR parameter update control field indicates performing EMLMR parameter update, the multi-link operation update response frame further includes a third information field to indicate the EMLMR parameter to be updated.

Optionally, the EMLSR parameter to be updated includes at least one of:
a minimum media access control (MAC) padding delay of an initial frame in the EMLSR mode; or
a minimum delay for an EMLSR link to transition from a frame exchange state to a monitoring state in the EMLSR mode.

The second information field includes at least one of a third information sub-field or a fourth information sub-field, the third information sub-field indicates the minimum MAC padding delay of the initial frame in the EMLSR mode, and the fourth information sub-field indicates the minimum delay for the EMLSR link to transition from the frame exchange state to the monitoring state in the EMLSR mode.

The minimum MAC padding delay of the initial frame in the EMLSR mode may refer to an EMLSR padding delay, and the minimum delay for the EMLSR link to transition from the frame exchange state to the monitoring state in the EMLSR mode may refer to an EMLSR transition delay.

Optionally, the EMLMR parameter to be updated includes at least one of:
a minimum media access control (MAC) padding delay of an initial frame in the EMLMR mode; or
a minimum delay for an EMLMR link to transition from a frame exchange state to a monitoring state in the EMLMR mode.

The second information field includes at least one of a first information sub-field or a second information sub-field, the first information sub-field indicates the minimum MAC padding delay of the initial frame in the EMLMR mode, and the second information sub-field indicates the minimum delay for the EMLMR link to transition from the frame exchange state to the monitoring state in the EMLMR mode.

The minimum MAC padding delay of the initial frame in the EMLMR mode may refer to an EMLMR padding delay, and the minimum delay for the EMLMR link to transition from the frame exchange state to the monitoring state in the EMLMR mode may refer to an EMLMR transition delay.

As an example, the multi-link operation update request frame includes a first information field and a second information field.

The first information field in the multi-link operation update request frame includes an enhanced multi-link control field, and the enhanced multi-link control field includes an EMLSR mode field and an EMLMR mode field. Furthermore, when the Non-AP MLD operates in the EMLSR mode, the enhanced multi-link control field further includes an EMLSR Link Bitmap field and an EMLSR Parameter Update Control field.

The multi-link operation update request frame response frame includes a second information field for indicating the EMLSR parameter to be updated. The second information field includes a third information sub-field and a fourth information sub-field. The third information sub-field indicates the minimum MAC padding delay of the initial frame in the EMLSR mode, and the fourth information sub-field indicates the minimum delay for the EMLSR link to transition from the frame exchange state to the monitoring state in the EMLSR mode.

In this case, the multi-link operation update response frame may include at least one of the first information field or the second information field.

Moreover, the first information field in the multi-link operation update response frame may include an enhanced multi-link control field which may include an EMLSR mode field and an EMLMR mode field.

Moreover, when the Non-AP MLD operates in the EMLSR mode, and the multi-link operation update response frame includes an enhanced multi-link control field, the enhanced multi-link control field may include at least one of an EMLSR Link Bitmap field or an EMLSR Parameter Update Control field.

Moreover, when the multi-link operation update response frame includes a second information field, the second information field may include at least one of a third information sub-field or a fourth information sub-field.

As an example, the multi-link operation update request frame includes a first information field and a third information field.

The first information field in the multi-link operation update request frame includes an enhanced multi-link control field. The enhanced multi-link control field includes an EMLSR mode field and an EMLMR mode field. Furthermore, when the Non-AP MLD operates in the EMLMR mode, the enhanced multi-link control field further includes an EMLMR Link Bitmap field and an EMLMR Parameter Update Control field.

The multi-link operation update request frame response frame includes a third information field for indicating the EMLMR parameter to be updated. The third information field includes a first information sub-field and a second information sub-field. The first information sub-field indicates the minimum MAC padding delay of the initial frame in the EMLMR mode, and the second information sub-field indicates the minimum delay for the EMLMR link to transition from the frame exchange state to the monitoring state in the EMLMR mode.

In this case, the multi-link operation update response frame may include at least one of the first information field or the third information field.

Moreover, the first information field in the multi-link operation update response frame may include an enhanced multi-link control field which may include an EMLSR mode field and an EMLMR mode field.

Moreover, when the Non-AP MLD operates in the EMLMR mode, and the multi-link operation update response frame includes an enhanced multi-link control field, the enhanced multi-link control field may include at least one of an EMLMR Link Bitmap field or an EMLMR Parameter Update Control field.

Moreover, when the multi-link operation update response frame includes a third information field, the third information field may include at least one of the first information sub-field or the second information sub-field.

In step S23, when the Non-AP MLD receives, within a transition timeout, a multi-link operation update response frame, or fails to receive the multi-link operation update response frame within the transition timeout, the Non-AP MLD performs a link update for the enhanced multi-link mode.

In some embodiments, if the Non-AP MLD does not receive a multi-link operation update response frame within the transition timeout, the Non-AP MLD may perform a link update for the enhanced multi-link mode.

If the Non-AP MLD operates in the EMLSR mode, the Non-AP MLD performs an EMLSR link update. If the Non-AP MLD operates in the EMLMR mode, the Non-AP MLD performs an EMLMR link update.

Optionally, when the multi-link operation update request frame includes a first information field, the first information field includes an enhanced multi-link control field, and the enhanced multi-link control field includes an EMLSR link bitmap field, the Non-AP MLD may perform an EMLSR link update based on the EMLSR link indicated by the EMLSR link bitmap field.

Optionally, when the multi-link operation update request frame includes a first information field, the first information field includes an enhanced multi-link control field, and the enhanced multi-link control field includes an EMLMR link bitmap field, the Non-AP MLD may perform an EMLMR link update based on the EMLMR link indicated by the EMLMR link bitmap field.

In some embodiments, if the Non-AP MLD receive a multi-link operation update response frame sent by the AP MLD within a transition time, the Non-AP MLD may perform a link update for the enhanced multi-link mode.

If the Non-AP MLD operates in the EMLSR mode, the Non-AP MLD performs an EMLSR link update. If the Non-AP MLD operates in the EMLMR mode, the Non-AP MLD performs an EMLMR link update.

Optionally, when the multi-link operation update request frame includes a first information field, the first information field includes an enhanced multi-link control field, and the enhanced multi-link control field includes an EMLSR link bitmap field, the Non-AP MLD may perform an EMLSR link update based on the EMLSR link indicated by the EMLSR link bitmap field. Alternatively, when the multi-link operation update response frame includes a first information field, the first information field includes an enhanced multi-link control field, and the enhanced multi-link control field includes an EMLSR link bitmap field, the Non-AP MLD may perform an EMLSR link update based on the EMLSR link indicated by the EMLSR link bitmap field.

Optionally, when the multi-link operation update request frame includes a first information field, the first information field includes an enhanced multi-link control field, and the enhanced multi-link control field includes an EMLMR link bitmap field, the Non-AP MLD may perform an EMLMR link update based on the EMLMR link indicated by the EMLMR link bitmap field. Alternatively, when the multi-link operation update response frame includes a first information field, the first information field includes an enhanced multi-link control field, and the enhanced multi-link control field includes an EMLMR link bitmap field, the Non-AP MLD may perform an EMLMR link update based on the EMLMR link indicated by the EMLMR link bitmap field.

In step S24, the Non-AP MLD determines whether the multi-link operation update request frame and the multi-link operation update response frame include an enhanced multi-link mode parameter update control field.

The enhanced multi-link mode parameter update control field includes an EMLSR parameter update control field or an EMLMR parameter update control field.

That is, the Non-AP MLD determines whether the multi-link operation update request frame and the multi-link operation update response frame include the EMLSR parameter update control field or the EMLMR parameter update control field.

As an example, when operating in the EMLSR mode, the Non-AP MLD determines whether the multi-link operation update request frame and the multi-link operation update response frame include an EMLSR parameter update control field. When operating in the EMLMR mode, the Non-AP MLD determines whether the multi-link operation update request frame and the multi-link operation update response frame include an EMLMR parameter update control field.

If the multi-link operation update request frame and the multi-link operation update response frame include an enhanced multi-link mode parameter update control field, it proceeds to step S26; otherwise, it proceeds to step S25.

That is, when the Non-AP MLD operates in the EMLSR mode, and the multi-link operation update request frame and the multi-link operation update response frame include an EMLSR parameter update control field, it proceeds to step S26; otherwise, it proceeds to step S25. When the Non-AP MLD operates in the EMLMR mode, and the multi-link operation update request frame and the multi-link operation update response frame include an EMLMR parameter update control field, it proceeds to step S26; otherwise, it proceeds to step S25.

In step S25, the Non-AP MLD does not perform a parameter update for the enhanced multi-link mode.

In some embodiments, when the Non-AP MLD operates in the EMLSR mode, the Non-AP MLD does not perform an EMLSR parameter update. When the Non-AP MLD operates in the EMLMR mode, the Non-AP MLD does not perform an EMLMR parameter update.

In step S26, the Non-AP MLD determines whether the enhanced multi-link mode update control field indicates a parameter update for the enhanced multi-link mode.

In some embodiments, if the multi-link operation update request frame and the multi-link operation update response frame include an EMLSR parameter update control field, the Non-AP MLD determines whether the EMLSR parameter update control field indicates an EMLSR parameter update via a third value.

If the multi-link operation update request frame and the multi-link operation update response frame include an EMLMR parameter update control field, the Non-AP MLD determines whether the EMLSR parameter update control field indicates an EMLSR parameter update via a fourth value.

If it is determined that the enhanced multi-link mode update control field is used to indicate a parameter update for the enhanced multi-link mode, it proceeds to step S27; otherwise, it proceeds to step S25.

That is, when the Non-AP MLD operates in the EMLSR mode, and the EMLSR parameter update control field in the multi-link operation update request frame and the multi-link operation update response frame indicates an EMLSR parameter update via a third value, it proceeds to step S27; otherwise, it proceeds to step S25. When the Non-AP MLD operates in the EMLMR mode, and the EMLMR parameter update control field in the multi-link operation update request frame and the multi-link operation update response frame indicates an EMLMR parameter update via a fourth value, it proceeds to step S27; otherwise, it proceeds to step S25.

In step S27, the Non-AP MLD determines whether the multi-link operation update request frame and the multi-link operation update response frame include an information field for indicating an enhanced multi-link mode parameter to be updated.

The information field for indicating the enhanced multi-link mode parameter to be updated includes a second information field for indicating an EMLSR parameter to be updated and a third information field for indicating an EMLMR parameter to be updated.

In some embodiments, when the Non-AP MLD operates in the EMLSR mode, the Non-AP MLD determines whether the multi-link operation update request frame and the multi-link operation update response frame include a second information field. If the second information field is included, it proceeds to step S29; otherwise, it proceeds to step S28. When the Non-AP MLD operates in the EMLMR mode, the Non-AP MLD determines whether the multi-link operation update request frame and the multi-link operation update response frame include a third information field. If the third information field is included, it proceeds to step S29; otherwise, it proceeds to step S28.

The second information field indicates an EMLSR parameter to be updated, and the third information field indicates an EMLMR parameter to be updated.

In step S28, the Non-AP MLD updates an enhanced multi-link mode parameter carried in a basic multi-link element field.

In some embodiments, when operating in the EMLSR mode, the Non-AP MLD may update an EMLSR parameter carried in a basic multi-link element field of a message frame during an association process of the Non-AP MLD and the AP MLD. When operating in the EMLMR mode, the Non-AP MLD may update an EMLMR parameter carried in a basic multi-link element field of a message frame during an association process of the Non-AP MLD and the AP MLD.

In step S29, the Non-AP MLD performs a parameter update for an enhanced multi-link mode based on an enhanced multi-link mode parameter to be updated as indicated by a corresponding information field.

In some embodiments, when the Non-AP MLD operates in the EMLSR mode, the Non-AP MLD may update an EMLSR parameter based on an EMLSR parameter to be updated as indicated by a second information field.

When the second information field in the multi-link operation update request frame or the multi-link operation update response frame includes a third information sub-field, the Non-AP MLD may update a minimum MAC padding delay of an initial frame in the EMLSR mode indicated by the third information sub-field, for example, update an EMLSR padding delay parameter in the EMLSR mode.

When the second information field in the multi-link operation update request frame or the multi-link operation update response frame includes a fourth information sub-field, the Non-AP MLD may update a minimum delay for an EMLSR link to transition from a frame exchange state to a monitoring state in the EMLSR mode indicated by the fourth information sub-field, for example, update an EMLSR transition delay parameter in the EMLSR mode.

In some embodiments, when the Non-AP MLD operates in the EMLMR mode, the Non-AP MLD may update an EMLMR parameter based on an EMLMR parameter indicated by a third information field.

When the third information field in the multi-link operation update request frame or the multi-link operation update response frame includes a first information sub-field, the Non-AP MLD may update a minimum MAC padding delay of an initial frame in the EMLMR mode indicated by the first information sub-field, for example, update an EMLMR padding delay parameter in the EMLMR mode.

When the third information field in the multi-link operation update request frame or the multi-link operation update response frame includes a second information sub-field, the Non-AP MLD may update a minimum delay for an EMLMR link to transition from a frame exchange state to a monitoring state in the EMLMR mode indicated by the second information sub-field, for example, update an EMLMR transition delay parameter in the EMLMR mode.

The communication method of the embodiments of the present disclosure may include the above steps and at least one of the embodiments. For example, any one of steps S21-S23 may be implemented as an independent embodiment; steps S21-S22 may be implemented as an independent embodiment; steps S21-S29 may be implemented as an independent embodiment; but the present disclosure is not limited thereto.

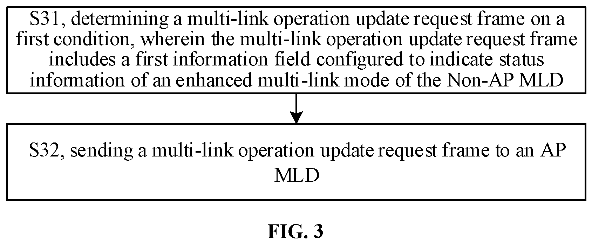

FIG. 3 is a first flow diagram of a communication method according to an embodiment of the present disclosure. As shown in FIG. 3, the method is executed by a Non-AP MLD and includes the following steps.

In step S31, a multi-link operation update request frame is determined on a first condition, wherein the multi-link operation update request frame includes a first information field configured to indicate status information of an enhanced multi-link mode of the Non-AP MLD.

In some embodiments, the enhanced multi-link mode includes an enhanced multi-link single radio (EMLSR) mode or an enhanced multi-link multi-radio (EMLMR) mode.

In some embodiments, the first condition includes at least one of:
In some embodiments, the first condition includes at least one of:
in a case where the Non-AP MLD operates in the enhanced multi-link mode, a new communication link being enabled between the Non-AP MLD and an AP MLD; or
in a case where the Non-AP MLD operates in the enhanced multi-link mode, at least one enabled communication link of the Non-AP MLD in the enhanced multi-link mode being disabled.

As an example, when the Non-AP MLD operates in the EMLSR mode or EMLMR mode, and a new communication link is enabled between the Non-AP MLD and the AP MLD, the Non-AP MLD determines the multi-link operation update request frame.

As an example, when the Non-AP MLD operates in the EMLSR mode, and at least one enabled EMLSR link of the Non-AP MLD in the EMLSR mode is disabled, the Non-AP MLD determines the multi-link operation update request frame.

As an example, when the Non-AP MLD operates in the EMLMR mode, and at least one enabled EMLMR link of the Non-AP MLD in the EMLMR mode is disabled, the Non-AP MLD determines the multi-link operation update request frame.

In some embodiments, the multi-link operation update response frame includes the first information field, the first information field includes an enhanced multi-link control (EML Control) field, and the enhanced multi-link control field includes an EMLSR mode field and an EMLMR mode field.

The EMLSR mode field indicates with a first value that the Non-AP MLD operates in the EMLSR mode, and indicates with another value that the Non-AP MLD does not operate in the EMLSR mode.

The first value may be 1, which is not limited herein.

The EMLMR mode field indicates with a second value that the Non-AP MLD operates in the EMLMR mode, and indicates with another value that the Non-AP MLD does not operate in the EMLMR mode.

The second value may be 1, which is not limited herein.

As an example, the first information field includes an enhanced multi-link control field, which includes an EMLSR mode field and an EMLMR mode field. When the EMLSR mode field has an identifier value of 1 and the EMLMR mode field has an identifier value of 0, this indicates that the Non-AP MLD operates in the EMLSR mode; and when the EMLSR mode field has an identifier value of 0 and the EMLMR mode field has an identifier value of 1, this indicates that the Non-AP MLD operates in the EMLMR mode.

In some embodiments, when the Non-AP MLD operates in the EMLSR mode, the enhanced multi-link control field further includes an EMLSR link bitmap field; and when the Non-AP MLD operates in the EMLMR mode, the enhanced multi-link control field further includes an EMLMR link bitmap field.

The EMLSR link bitmap field indicates an EMLSR link when the Non-AP MLD operates in the EMLSR mode, and the EMLMR link bitmap field indicates an EMLMR link when the Non-AP MLD operates in the EMLMR mode.

As an example, the Non-AP MLD determines a multi-link operation update request frame on a first condition. The multi-link operation update request frame includes a first information field, and the first information field includes an enhanced multi-link control field. The enhanced multi-link control field includes an EMLSR mode field and an EMLMR mode field.

When the identifier value of the EMLSR mode field is 1 and the identifier value of the EMLMR mode field is 0, this indicates that the Non-AP MLD operates in the EMLSR mode. At this time, the enhanced multi-link control field further includes an EMLSR link bitmap field, which indicates an EMLSR link when the Non-AP MLD operates in the EMLSR mode.

When the identifier value of the EMLMR mode field is 0 and the identifier value of the EMLMR mode field is 1, this indicates that the Non-AP MLD operates in the EMLMR mode. At this time, the enhanced multi-link control field further includes an EMLMR link bitmap field, which indicates an EMLMR link when the Non-AP MLD operates in the EMLMR mode.

In some embodiments, the enhanced multi-link control field further includes an EMLSR parameter update control field or an EMLMR parameter update control field.

The EMLSR parameter update control field indicates, with a third value, performing EMLSR parameter update, that is, indicating updating the EMLSR parameter carried in a Basic Multi-Link element field during the association process of the Non-AP MLD and the AP MLD.

The EMLMR parameter update control field indicates, with a fourth value, performing EMLMR parameter update, that is, indicating updating the EMLMR parameter carried in a Basic Multi-Link element field during the association process of the Non-AP MLD and the AP MLD.

The third and fourth values may be set to 1, which is not limited herein.

As an example, when the Non-AP MLD operates in the EMLSR mode, the multi-link operation update request frame includes a first information field. The first information field includes an enhanced multi-link control field, and the enhanced multi-link control field includes an EMLSR parameter update control field. When the identifier value of the EMLSR parameter update control field is the third value, it indicates performing the EMLSR parameter update, i.e., requests to perform the EMLSR parameter update.

As an example, when the Non-AP MLD operates in the EMLMR mode, the multi-link operation update request frame includes a first information field. The first information field includes an enhanced multi-link control field, and the enhanced multi-link control field includes an EMLMR parameter update control field. When the identifier value of the EMLMR parameter update control field is the fourth value, it indicates performing the EMLMR parameter update, i.e., requests to perform the EMLMR parameter update.

In some embodiments, when the enhanced multi-link control field includes an EMLSR parameter update control field and the EMLSR parameter update control field indicates performing the EMLSR parameter update, the multi-link operation update request frame further includes a second information field configured to indicate an EMLSR parameter to be updated.

When the enhanced multi-link control field includes an EMLMR parameter update control field and the EMLMR parameter update control field indicates performing the EMLMR parameter update, the multi-link operation update request frame further includes a third information field configured to indicate an EMLMR parameter to be updated

Optionally, the EMLSR parameter to be updated includes at least one of:
a minimum media access control (MAC) padding delay of an initial frame in the EMLSR mode; or
a minimum delay for an EMLSR link to transition from a frame exchange state to a monitoring state in the EMLSR mode.

The second information field includes at least one of a third information sub-field or a fourth information sub-field, the third information sub-field indicates the minimum MAC padding delay of the initial frame in the EMLSR mode, and the fourth information sub-field indicates the minimum delay for the EMLSR link to transition from the frame exchange state to the monitoring state in the EMLSR mode.

The minimum MAC padding delay of the initial frame in the EMLSR mode may refer to an EMLSR padding delay, and the minimum delay for the EMLSR link to transition from the frame exchange state to the monitoring state in the EMLSR mode may refer to an EMLSR transition delay.

Optionally, the EMLMR parameter to be updated includes at least one of:
a minimum media access control (MAC) padding delay of an initial frame in the EMLMR mode; or
a minimum delay for an EMLMR link to transition from a frame exchange state to a monitoring state in the EMLMR mode.

The third information field includes at least one of a first information sub-field or a second information sub-field, the first information sub-field indicates the minimum MAC padding delay of the initial frame in the EMLMR mode, and the second information sub-field indicates the minimum delay for the EMLMR link to transition from the frame exchange state to the monitoring state in the EMLMR mode.

The minimum MAC padding delay of the initial frame in the EMLMR mode may refer to an EMLMR padding delay, and the minimum delay for the EMLMR link to transition from the frame exchange state to the monitoring state in the EMLMR mode may refer to an EMLMR transition delay.

In step S32, the multi-link operation update request frame is sent to an AP MLD.

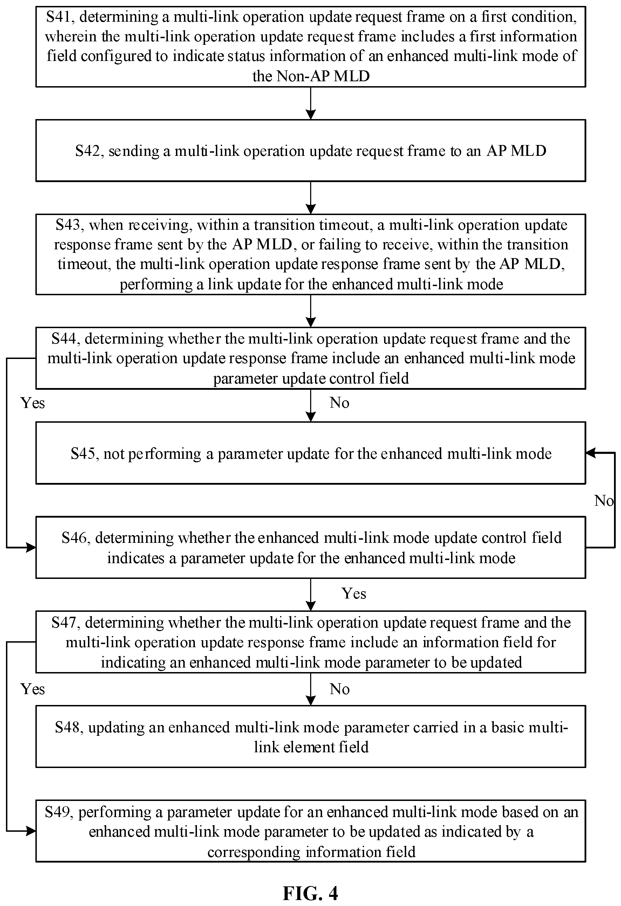

FIG. 4 is a second flow diagram of a communication method according to an embodiment of the present disclosure. As shown in FIG. 4, the method is executed by a Non-AP MLD and includes the following steps.

In step S41, a multi-link operation update request frame is determined on a first condition, wherein the multi-link operation update request frame includes a first information field configured to indicate status information of an enhanced multi-link mode of the Non-AP MLD.

In step S42, the multi-link operation update request frame is sent to an AP MLD.

In some embodiments, the implementation of steps S41 to S42 may refer to the implementation of steps S31 to S32 shown in FIG. 3, which is not repeated herein.

In step S43, when a multi-link operation update response frame sent by the AP MLD is received within a transition timeout, or the multi-link operation update response frame sent by the AP MLD is not received within the transition timeout, a link update for the enhanced multi-link mode is performed.

In some embodiments, the AP MLD sends the multi-link operation update response frame to the Non-AP MLD within the transition timeout, and the multi-link operation update response frame does not include the first information field.

Herein, the transition timeout is indicated by a transition timeout field when the Non-AP MLD and the AP MLD establish an association. A message frame during the association process between the Non-AP MLD and the AP MLD includes a Basic Multi-Link element field, the Basic Multi-Link element field includes an EML Capabilities field, and the EML Capabilities field includes the Transition Timeout field.

In some embodiments, the AP MLD sends the multi-link operation update response frame to the Non-AP MLD within the transition timeout, and the multi-link operation update response frame includes the first information field.

When the first information field of the multi-link operation update request frame includes an enhanced multi-link control (EML Control) field, the first information field of the multi-link operation update response frame may include an enhanced multi-link control field.

As an example, the first information field in the multi-link operation update response frame may include an enhanced multi-link control field, and the enhanced multi-link control field may include an EMLSR mode field and an EMLMR mode field.

As an example, when the first information field in the multi-link operation update response frame may include an enhanced multi-link control field, and the Non-AP MLD operates in the EMLSR mode, the enhanced multi-link control field may include an EMLSR link bitmap field.

As an example, when the first information field in the multi-link operation update response frame may include an enhanced multi-link control field, and the Non-AP MLD operates in the EMLMR mode, the enhanced multi-link control field may include an EMLMR link bitmap field.

As an example, the first information field in the multi-link operation update response frame may include an enhanced multi-link control field, and the enhanced multi-link control field may include an EMLSR parameter update control field.

As an example, the first information field in the multi-link operation update response frame may include an enhanced multi-link control field, and the enhanced multi-link control field may include an EMLMR parameter update control field.

As an example, the multi-link operation update response frame may further include a second information field. That is, when the first information field in the multi-link operation update response frame includes an enhanced multi-link control field, and the enhanced multi-link control field includes an EMLSR parameter update control field, and when the EMLSR parameter update control field indicates performing EMLSR parameter update, the multi-link operation update response frame further includes a second information field to indicate the EMLSR parameter to be updated.

As an example, the multi-link operation update response frame may further include a third information field. That is, when the first information field in the multi-link operation update response frame includes an enhanced multi-link control field, and the enhanced multi-link control field includes an EMLMR parameter update control field, and when the EMLMR parameter update control field indicates performing EMLMR parameter update, the multi-link operation update response frame further includes a third information field to indicate the EMLMR parameter to be updated.

Optionally, the EMLSR parameter to be updated includes at least one of:
a minimum media access control (MAC) padding delay of an initial frame in the EMLSR mode; or
a minimum delay for an EMLSR link to transition from a frame exchange state to a monitoring state in the EMLSR mode.

The second information field includes at least one of a third information sub-field or a fourth information sub-field, the third information sub-field indicates the minimum MAC padding delay of the initial frame in the EMLSR mode, and the fourth information sub-field indicates the minimum delay for the EMLSR link to transition from the frame exchange state to the monitoring state in the EMLSR mode.

The minimum MAC padding delay of the initial frame in the EMLSR mode may refer to an EMLSR padding delay, and the minimum delay for the EMLSR link to transition from the frame exchange state to the monitoring state in the EMLSR mode may refer to an EMLSR transition delay.

Optionally, the EMLMR parameter to be updated includes at least one of:
a minimum media access control (MAC) padding delay of an initial frame in the EMLMR mode; or
a minimum delay for an EMLMR link to transition from a frame exchange state to a monitoring state in the EMLMR mode.

The second information field includes at least one of a first information sub-field or a second information sub-field, the first information sub-field indicates the minimum MAC padding delay of the initial frame in the EMLMR mode, and the second information sub-field indicates the minimum delay for the EMLMR link to transition from the frame exchange state to the monitoring state in the EMLMR mode.

The minimum MAC padding delay of the initial frame in the EMLMR mode may refer to an EMLMR padding delay, and the minimum delay for the EMLMR link to transition from the frame exchange state to the monitoring state in the EMLMR mode may refer to an EMLMR transition delay.

As an example, the multi-link operation update request frame includes a first information field and a second information field.

The first information field in the multi-link operation update request frame includes an enhanced multi-link control field, and the enhanced multi-link control field includes an EMLSR mode field and an EMLMR mode field. Furthermore, when the Non-AP MLD operates in the EMLSR mode, the enhanced multi-link control field further includes an EMLSR Link Bitmap field and an EMLSR Parameter Update Control field.

The multi-link operation update request frame response frame includes a second information field for indicating the EMLSR parameter to be updated. The second information field includes a third information sub-field and a fourth information sub-field. The third information sub-field indicates the minimum MAC padding delay of the initial frame in the EMLSR mode, and the fourth information sub-field indicates the minimum delay for the EMLSR link to transition from the frame exchange state to the monitoring state in the EMLSR mode.

In this case, the multi-link operation update response frame may include at least one of the first information field or the second information field.

Moreover, the first information field in the multi-link operation update response frame may include an enhanced multi-link control field which may include an EMLSR mode field and an EMLMR mode field.

Moreover, when the Non-AP MLD operates in the EMLSR mode, and the multi-link operation update response frame includes an enhanced multi-link control field, the enhanced multi-link control field may include at least one of an EMLSR Link Bitmap field or an EMLSR Parameter Update Control field.

Moreover, when the multi-link operation update response frame includes a second information field, the second information field may include at least one of a third information sub-field or a fourth information sub-field.

As an example, the multi-link operation update request frame includes a first information field and a third information field.

The first information field in the multi-link operation update request frame includes an enhanced multi-link control field. The enhanced multi-link control field includes an EMLSR mode field and an EMLMR mode field. Furthermore, when the Non-AP MLD operates in the EMLMR mode, the enhanced multi-link control field further includes an EMLMR Link Bitmap field and an EMLMR Parameter Update Control field.

The multi-link operation update request frame response frame includes a third information field for indicating the EMLMR parameter to be updated. The third information field includes a first information sub-field and a second information sub-field. The first information sub-field indicates the minimum MAC padding delay of the initial frame in the EMLMR mode, and the second information sub-field indicates the minimum delay for the EMLMR link to transition from the frame exchange state to the monitoring state in the EMLMR mode.

In this case, the multi-link operation update response frame may include at least one of the first information field or the third information field.

Moreover, the first information field in the multi-link operation update response frame may include an enhanced multi-link control field which may include an EMLSR mode field and an EMLMR mode field.

Moreover, when the Non-AP MLD operates in the EMLMR mode, and the multi-link operation update response frame includes an enhanced multi-link control field, the enhanced multi-link control field may include at least one of an EMLMR Link Bitmap field or an EMLMR Parameter Update Control field.

Moreover, when the multi-link operation update response frame includes a third information field, the third information field may include at least one of the first information sub-field or the second information sub-field.

In some embodiments, if the Non-AP MLD does not receive a multi-link operation update response frame within the transition timeout, the Non-AP MLD may perform a link update for the enhanced multi-link mode.

If the Non-AP MLD operates in the EMLSR mode, the Non-AP MLD performs an EMLSR link update. If the Non-AP MLD operates in the EMLMR mode, the Non-AP MLD performs an EMLMR link update.

Optionally, when the multi-link operation update request frame includes a first information field, the first information field includes an enhanced multi-link control field, and the enhanced multi-link control field includes an EMLSR link bitmap field, the Non-AP MLD may perform an EMLSR link update based on the EMLSR link indicated by the EMLSR link bitmap field.

Optionally, when the multi-link operation update request frame includes a first information field, the first information field includes an enhanced multi-link control field, and the enhanced multi-link control field includes an EMLMR link bitmap field, the Non-AP MLD may perform an EMLMR link update based on the EMLMR link indicated by the EMLMR link bitmap field.

In some embodiments, if the Non-AP MLD receive a multi-link operation update response frame sent by the AP MLD within a transition time, the Non-AP MLD may perform a link update for the enhanced multi-link mode.

If the Non-AP MLD operates in the EMLSR mode, the Non-AP MLD performs an EMLSR link update. If the Non-AP MLD operates in the EMLMR mode, the Non-AP MLD performs an EMLMR link update.

Optionally, when the multi-link operation update request frame includes a first information field, the first information field includes an enhanced multi-link control field, and the enhanced multi-link control field includes an EMLSR link bitmap field, the Non-AP MLD may perform an EMLSR link update based on the EMLSR link indicated by the EMLSR link bitmap field. Alternatively, when the multi-link operation update response frame includes a first information field, the first information field includes an enhanced multi-link control field, and the enhanced multi-link control field includes an EMLSR link bitmap field, the Non-AP MLD may perform an EMLSR link update based on the EMLSR link indicated by the EMLSR link bitmap field.

Optionally, when the multi-link operation update request frame includes a first information field, the first information field includes an enhanced multi-link control field, and the enhanced multi-link control field includes an EMLMR link bitmap field, the Non-AP MLD may perform an EMLMR link update based on the EMLMR link indicated by the EMLMR link bitmap field. Alternatively, when the multi-link operation update response frame includes a first information field, the first information field includes an enhanced multi-link control field, and the enhanced multi-link control field includes an EMLMR link bitmap field, the Non-AP MLD may perform an EMLMR link update based on the EMLMR link indicated by the EMLMR link bitmap field.

In step S44, the Non-AP MLD determines whether the multi-link operation update request frame and the multi-link operation update response frame include an enhanced multi-link mode parameter update control field.

The enhanced multi-link mode parameter update control field includes an EMLSR parameter update control field or an EMLMR parameter update control field.

That is, the Non-AP MLD determines whether the multi-link operation update request frame and the multi-link operation update response frame include the EMLSR parameter update control field or the EMLMR parameter update control field.

As an example, when operating in the EMLSR mode, the Non-AP MLD determines whether the multi-link operation update request frame and the multi-link operation update response frame include an EMLSR parameter update control field. When operating in the EMLMR mode, the Non-AP MLD determines whether the multi-link operation update request frame and the multi-link operation update response frame include an EMLMR parameter update control field.

If the multi-link operation update request frame and the multi-link operation update response frame include an enhanced multi-link mode parameter update control field, it proceeds to step S46; otherwise, it proceeds to step S45.

That is, when the Non-AP MLD operates in the EMLSR mode, and the multi-link operation update request frame and the multi-link operation update response frame include an EMLSR parameter update control field, it proceeds to step S46; otherwise, it proceeds to step S45. When the Non-AP MLD operates in the EMLMR mode, and the multi-link operation update request frame and the multi-link operation update response frame include an EMLMR parameter update control field, it proceeds to step S46; otherwise, it proceeds to step S45.

In step S45, the Non-AP MLD does not perform a parameter update for the enhanced multi-link mode.

In some embodiments, when the Non-AP MLD operates in the EMLSR mode, the Non-AP MLD does not perform an EMLSR parameter update. When the Non-AP MLD operates in the EMLMR mode, the Non-AP MLD does not perform an EMLMR parameter update.

In step S46, the Non-AP MLD determines whether the enhanced multi-link mode update control field indicates a parameter update for the enhanced multi-link mode.

In some embodiments, if the multi-link operation update request frame and the multi-link operation update response frame include an EMLSR parameter update control field, the Non-AP MLD determines whether the EMLSR parameter update control field indicates an EMLSR parameter update via a third value.

If the multi-link operation update request frame and the multi-link operation update response frame include an EMLMR parameter update control field, the Non-AP MLD determines whether the EMLSR parameter update control field indicates an EMLSR parameter update via a fourth value.

If it is determined that the enhanced multi-link mode update control field is used to indicate a parameter update for the enhanced multi-link mode, it proceeds to step S47; otherwise, it proceeds to step S45.

That is, when the Non-AP MLD operates in the EMLSR mode, and the EMLSR parameter update control field in the multi-link operation update request frame and the multi-link operation update response frame indicates an EMLSR parameter update via a third value, it proceeds to step S47; otherwise, it proceeds to step S45. When the Non-AP MLD operates in the EMLMR mode, and the EMLMR parameter update control field in the multi-link operation update request frame and the multi-link operation update response frame indicates an EMLMR parameter update via a fourth value, it proceeds to step S47; otherwise, it proceeds to step S45.

In step S47, the Non-AP MLD determines whether the multi-link operation update request frame and the multi-link operation update response frame include an information field for indicating an enhanced multi-link mode parameter to be updated.

The information field for indicating the enhanced multi-link mode parameter to be updated includes a second information field for indicating an EMLSR parameter to be updated and a third information field for indicating an EMLMR parameter to be updated.

In some embodiments, when the Non-AP MLD operates in the EMLSR mode, the Non-AP MLD determines whether the multi-link operation update request frame and the multi-link operation update response frame include a second information field. If the second information field is included, it proceeds to step S49; otherwise, it proceeds to step S48. When the Non-AP MLD operates in the EMLMR mode, the Non-AP MLD determines whether the multi-link operation update request frame and the multi-link operation update response frame include a third information field. If the third information field is included, it proceeds to step S49; otherwise, it proceeds to step S48.

The second information field indicates an EMLSR parameter to be updated, and the third information field indicates an EMLMR parameter to be updated.

In step S48, the Non-AP MLD updates an enhanced multi-link mode parameter carried in a basic multi-link element field.

In some embodiments, when operating in the EMLSR mode, the Non-AP MLD may update an EMLSR parameter carried in a basic multi-link element field of a message frame during an association process of the Non-AP MLD and the AP MLD. When operating in the EMLMR mode, the Non-AP MLD may update an EMLMR parameter carried in a basic multi-link element field of a message frame during an association process of the Non-AP MLD and the AP MLD.

In step S49, the Non-AP MLD performs a parameter update for an enhanced multi-link mode based on an enhanced multi-link mode parameter to be updated as indicated by a corresponding information field.

In some embodiments, when the Non-AP MLD operates in the EMLSR mode, the Non-AP MLD may update an EMLSR parameter based on an EMLSR parameter to be updated as indicated by a second information field.

When the second information field in the multi-link operation update request frame or the multi-link operation update response frame includes a third information sub-field, the Non-AP MLD may update a minimum MAC padding delay of an initial frame in the EMLSR mode indicated by the third information sub-field, for example, update an EMLSR padding delay parameter in the EMLSR mode.

When the second information field in the multi-link operation update request frame or the multi-link operation update response frame includes a fourth information sub-field, the Non-AP MLD may update a minimum delay for an EMLSR link to transition from a frame exchange state to a monitoring state in the EMLSR mode indicated by the fourth information sub-field, for example, update an EMLSR transition delay parameter in the EMLSR mode.

In some embodiments, when the Non-AP MLD operates in the EMLMR mode, the Non-AP MLD may update an EMLMR parameter based on an EMLMR parameter indicated by a third information field.

When the third information field in the multi-link operation update request frame or the multi-link operation update response frame includes a first information sub-field, the Non-AP MLD may update a minimum MAC padding delay of an initial frame in the EMLMR mode indicated by the first information sub-field, for example, update an EMLMR padding delay parameter in the EMLMR mode.

When the third information field in the multi-link operation update request frame or the multi-link operation update response frame includes a second information sub-field, the Non-AP MLD may update a minimum delay for an EMLMR link to transition from a frame exchange state to a monitoring state in the EMLMR mode indicated by the second information sub-field, for example, update an EMLMR transition delay parameter in the EMLMR mode.

The communication method of the embodiments of the present disclosure may include the above steps and at least one of the embodiments. For example, any one of steps S41-S43 may be implemented as an independent embodiment; steps S41-S49 may be implemented as an independent embodiment; but the present disclosure is not limited thereto.

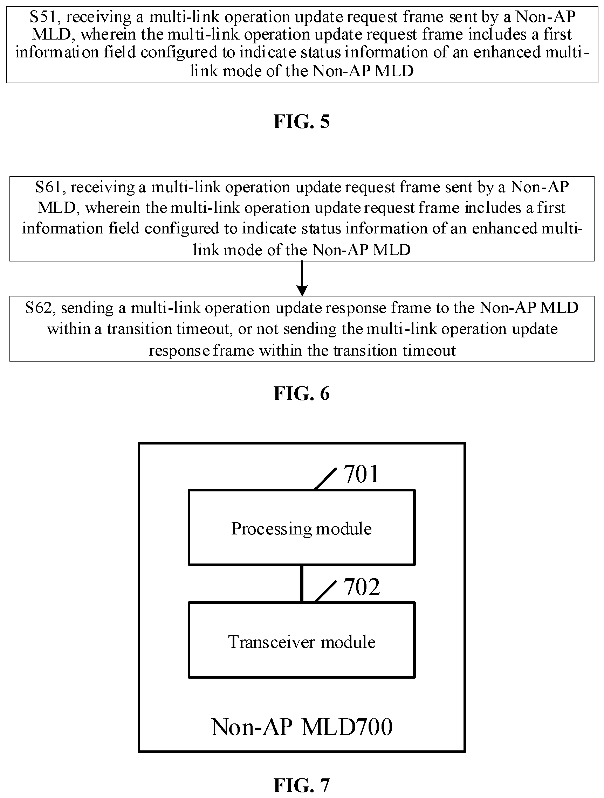

FIG. 5 is a third flow diagram of a communication method according to an embodiment of the present disclosure. As shown in FIG. 5, the method is executed by an AP MLD and includes the following steps.

In step S51, a multi-link operation update request frame sent by a Non-AP MLD is received, wherein the multi-link operation update request frame includes a first information field configured to indicate status information of an enhanced multi-link mode of the Non-AP MLD.

In some embodiments, the enhanced multi-link mode includes an enhanced multi-link single radio (EMLSR) mode or an enhanced multi-link multi-radio (EMLMR) mode;

In some embodiments, the multi-link operation update request frame is sent by the Non-AP MLD on a first condition, and the first condition includes at least one of:
in a case where the Non-AP MLD operates in the enhanced multi-link mode, a new communication link being enabled between the Non-AP MLD and the AP MLD; or
in a case where the Non-AP MLD operates in the enhanced multi-link mode, at least one enabled communication link of the Non-AP MLD in the enhanced multi-link mode being disabled.

As an example, when the Non-AP MLD operates in the EMLSR mode or EMLMR mode, and a new communication link is enabled between the Non-AP MLD and the AP MLD, the Non-AP MLD determines the multi-link operation update request frame.

As an example, when the Non-AP MLD operates in the EMLSR mode, and at least one enabled EMLSR link of the Non-AP MLD in the EMLSR mode is disabled, the Non-AP MLD determines the multi-link operation update request frame.

As an example, when the Non-AP MLD operates in the EMLMR mode, at least one enabled EMLMR link of the Non-AP MLD in the EMLMR mode is disabled, the Non-AP MLD determines the multi-link operation update request frame.

In some embodiments, the multi-link operation update response frame includes the first information field, the first information field includes an enhanced multi-link control (EML Control) field, and the enhanced multi-link control field includes an EMLSR mode field and an EMLMR mode field.

The EMLSR mode field indicates with a first value that the Non-AP MLD operates in the EMLSR mode, and indicates with another value that the Non-AP MLD does not operate in the EMLSR mode.

The first value may be 1, which is not limited herein.

The EMLMR mode field indicates with a second value that the Non-AP MLD operates in the EMLMR mode, and indicates with another value that the Non-AP MLD does not operate in the EMLMR mode.

The second value may be 1, which is not limited herein.

As an example, the first information field includes an enhanced multi-link control field, which includes an EMLSR mode field and an EMLMR mode field. When the EMLSR mode field has an identifier value of 1 and the EMLMR mode field has an identifier value of 0, this indicates that the Non-AP MLD operates in the EMLSR mode; and when the EMLSR mode field has an identifier value of 0 and the EMLMR mode field has an identifier value of 1, this indicates that the Non-AP MLD operates in the EMLMR mode.

In some embodiments, when the Non-AP MLD operates in the EMLSR mode, the enhanced multi-link control field further includes an EMLSR link bitmap field; and when the Non-AP MLD operates in the EMLMR mode, the enhanced multi-link control field further includes an EMLMR link bitmap field.

The EMLSR link bitmap field indicates an EMLSR link when the Non-AP MLD operates in the EMLSR mode, and the EMLMR link bitmap field indicates an EMLMR link when the Non-AP MLD operates in the EMLMR mode.

As an example, the Non-AP MLD determines a multi-link operation update request frame on a first condition. The multi-link operation update request frame includes a first information field, and the first information field includes an enhanced multi-link control field. The enhanced multi-link control field includes an EMLSR mode field and an EMLMR mode field.

When the identifier value of the EMLSR mode field is 1 and the identifier value of the EMLMR mode field is 0, this indicates that the Non-AP MLD operates in the EMLSR mode. At this time, the enhanced multi-link control field further includes an EMLSR link bitmap field, which indicates an EMLSR link when the Non-AP MLD operates in the EMLSR mode.

When the identifier value of the EMLMR mode field is 0 and the identifier value of the EMLMR mode field is 1, this indicates that the Non-AP MLD operates in the EMLMR mode. At this time, the enhanced multi-link control field further includes an EMLMR link bitmap field, which indicates an EMLMR link when the Non-AP MLD operates in the EMLMR mode.

In some embodiments, the enhanced multi-link control field further includes an EMLSR parameter update control field or an EMLMR parameter update control field.

The EMLSR parameter update control field indicates, with a third value, performing EMLSR parameter update, that is, indicating updating the EMLSR parameter carried in a Basic Multi-Link element field during the association process of the Non-AP MLD and the AP MLD.

The EMLMR parameter update control field indicates, with a fourth value, performing EMLMR parameter update, that is, indicating updating the EMLMR parameter carried in a Basic Multi-Link element field during the association process of the Non-AP MLD and the AP MLD.

The third and fourth values may be set to 1, which is not limited herein.

As an example, when the Non-AP MLD operates in the EMLSR mode, the multi-link operation update request frame includes a first information field. The first information field includes an enhanced multi-link control field, and the enhanced multi-link control field includes an EMLSR parameter update control field. When the identifier value of the EMLSR parameter update control field is the third value, it indicates performing the EMLSR parameter update, i.e., requests to perform the EMLSR parameter update.

As an example, when the Non-AP MLD operates in the EMLMR mode, the multi-link operation update request frame includes a first information field. The first information field includes an enhanced multi-link control field, and the enhanced multi-link control field includes an EMLMR parameter update control field. When the identifier value of the EMLMR parameter update control field is the fourth value, it indicates performing the EMLMR parameter update, i.e., requests to perform the EMLMR parameter update.

In some embodiments, when the enhanced multi-link control field includes an EMLSR parameter update control field and the EMLSR parameter update control field indicates performing the EMLSR parameter update, the multi-link operation update request frame further includes a second information field configured to indicate an EMLSR parameter to be updated.

When the enhanced multi-link control field includes an EMLMR parameter update control field and the EMLMR parameter update control field indicates performing the EMLMR parameter update, the multi-link operation update request frame further includes a third information field configured to indicate an EMLMR parameter to be updated

Optionally, the EMLSR parameter to be updated includes at least one of:
a minimum media access control (MAC) padding delay of an initial frame in the EMLSR mode; or
a minimum delay for an EMLSR link to transition from a frame exchange state to a monitoring state in the EMLSR mode.

The second information field includes at least one of a third information sub-field or a fourth information sub-field, the third information sub-field indicates the minimum MAC padding delay of the initial frame in the EMLSR mode, and the fourth information sub-field indicates the minimum delay for the EMLSR link to transition from the frame exchange state to the monitoring state in the EMLSR mode.

The minimum MAC padding delay of the initial frame in the EMLSR mode may refer to an EMLSR padding delay, and the minimum delay for the EMLSR link to transition from the frame exchange state to the monitoring state in the EMLSR mode may refer to an EMLSR transition delay.

Optionally, the EMLMR parameter to be updated includes at least one of:
a minimum media access control (MAC) padding delay of an initial frame in the EMLMR mode; or
a minimum delay for an EMLMR link to transition from a frame exchange state to a monitoring state in the EMLMR mode.

The third information field includes at least one of a first information sub-field or a second information sub-field, the first information sub-field indicates the minimum MAC padding delay of the initial frame in the EMLMR mode, and the second information sub-field indicates the minimum delay for the EMLMR link to transition from the frame exchange state to the monitoring state in the EMLMR mode.

The minimum MAC padding delay of the initial frame in the EMLMR mode may refer to an EMLMR padding delay, and the minimum delay for the EMLMR link to transition from the frame exchange state to the monitoring state in the EMLMR mode may refer to an EMLMR transition delay.

FIG. 6 is a fourth flow diagram of a communication method according to an embodiment of the present disclosure. As shown in FIG. 6, the method is executed by an AP MLD and includes the following steps.

In step S61, a multi-link operation update request frame sent by a Non-AP MLD is received, wherein the multi-link operation update request frame includes a first information field configured to indicate status information of an enhanced multi-link mode of the Non-AP MLD.

In some embodiments, the implementation of step S61 may refer to the implementation of step S51 shown in FIG. 5, which is not repeated here.

In step S62, the AP MLD sends a multi-link operation update response frame to the Non-AP MLD within a transition timeout, or does not send the multi-link operation update response frame within the transition timeout.

In some embodiments, the AP MLD sends the multi-link operation update response frame to the Non-AP MLD within the transition timeout, and the multi-link operation update response frame does not include the first information field.

Herein, the transition timeout is indicated by a transition timeout field when the Non-AP MLD and the AP MLD establish an association. A message frame during the association process between the Non-AP MLD and the AP MLD includes a Basic Multi-Link element field, the Basic Multi-Link element field includes an EML Capabilities field, and the EML Capabilities field includes the Transition Timeout field.

In some embodiments, the AP MLD does not send the multi-link operation update response frame within the transition timeout.

In some embodiments, the AP MLD sends the multi-link operation update response frame to the Non-AP MLD within the transition timeout, and the multi-link operation update response frame includes the first information field.

When the first information field of the multi-link operation update request frame includes an enhanced multi-link control (EML Control) field, the first information field of the multi-link operation update response frame may include an enhanced multi-link control field.

As an example, the first information field in the multi-link operation update response frame may include an enhanced multi-link control field, and the enhanced multi-link control field may include an EMLSR mode field and an EMLMR mode field.

As an example, when the first information field in the multi-link operation update response frame may include an enhanced multi-link control field, and the Non-AP MLD operates in the EMLSR mode, the enhanced multi-link control field may include an EMLSR link bitmap field.

As an example, when the first information field in the multi-link operation update response frame may include an enhanced multi-link control field, and the Non-AP MLD operates in the EMLMR mode, the enhanced multi-link control field may include an EMLMR link bitmap field.

As an example, the first information field in the multi-link operation update response frame may include an enhanced multi-link control field, and the enhanced multi-link control field may include an EMLSR parameter update control field.

As an example, the first information field in the multi-link operation update response frame may include an enhanced multi-link control field, and the enhanced multi-link control field may include an EMLMR parameter update control field.

As an example, the multi-link operation update response frame may further include a second information field. That is, when the first information field in the multi-link operation update response frame includes an enhanced multi-link control field, and the enhanced multi-link control field includes an EMLSR parameter update control field, and when the EMLSR parameter update control field indicates performing EMLSR parameter update, the multi-link operation update response frame further includes a second information field to indicate the EMLSR parameter to be updated.

As an example, the multi-link operation update response frame may further include a third information field. That is, when the first information field in the multi-link operation update response frame includes an enhanced multi-link control field, and the enhanced multi-link control field includes an EMLMR parameter update control field, and when the EMLMR parameter update control field indicates performing EMLMR parameter update, the multi-link operation update response frame further includes a third information field to indicate the EMLMR parameter to be updated.

Optionally, the EMLSR parameter to be updated includes at least one of:
a minimum media access control (MAC) padding delay of an initial frame in the EMLSR mode; or
a minimum delay for an EMLSR link to transition from a frame exchange state to a monitoring state in the EMLSR mode.

The second information field includes at least one of a third information sub-field or a fourth information sub-field, the third information sub-field indicates the minimum MAC padding delay of the initial frame in the EMLSR mode, and the fourth information sub-field indicates the minimum delay for the EMLSR link to transition from the frame exchange state to the monitoring state in the EMLSR mode.

The minimum MAC padding delay of the initial frame in the EMLSR mode may refer to an EMLSR padding delay, and the minimum delay for the EMLSR link to transition from the frame exchange state to the monitoring state in the EMLSR mode may refer to an EMLSR transition delay.

Optionally, the EMLMR parameter to be updated includes at least one of:
a minimum media access control (MAC) padding delay of an initial frame in the EMLMR mode; or
a minimum delay for an EMLMR link to transition from a frame exchange state to a monitoring state in the EMLMR mode.

The second information field includes at least one of a first information sub-field or a second information sub-field, the first information sub-field indicates the minimum MAC padding delay of the initial frame in the EMLMR mode, and the second information sub-field indicates the minimum delay for the EMLMR link to transition from the frame exchange state to the monitoring state in the EMLMR mode.

The minimum MAC padding delay of the initial frame in the EMLMR mode may refer to an EMLMR padding delay, and the minimum delay for the EMLMR link to transition from the frame exchange state to the monitoring state in the EMLMR mode may refer to an EMLMR transition delay.

As an example, the multi-link operation update request frame includes a first information field and a second information field.

The first information field in the multi-link operation update request frame includes an enhanced multi-link control field, and the enhanced multi-link control field includes an EMLSR mode field and an EMLMR mode field. Furthermore, when the Non-AP MLD operates in the EMLSR mode, the enhanced multi-link control field further includes an EMLSR Link Bitmap field and an EMLSR Parameter Update Control field.

The multi-link operation update request frame response frame includes a second information field for indicating the EMLSR parameter to be updated. The second information field includes a third information sub-field and a fourth information sub-field. The third information sub-field indicates the minimum MAC padding delay of the initial frame in the EMLSR mode, and the fourth information sub-field indicates the minimum delay for the EMLSR link to transition from the frame exchange state to the monitoring state in the EMLSR mode.

In this case, the multi-link operation update response frame may include at least one of the first information field or the second information field.

Moreover, the first information field in the multi-link operation update response frame may include an enhanced multi-link control field which may include an EMLSR mode field and an EMLMR mode field.

Moreover, when the Non-AP MLD operates in the EMLSR mode, and the multi-link operation update response frame includes an enhanced multi-link control field, the enhanced multi-link control field may include at least one of an EMLSR Link Bitmap field or an EMLSR Parameter Update Control field.

Moreover, when the multi-link operation update response frame includes a second information field, the second information field may include at least one of a third information sub-field or a fourth information sub-field.

As an example, the multi-link operation update request frame includes a first information field and a third information field.

The first information field in the multi-link operation update request frame includes an enhanced multi-link control field. The enhanced multi-link control field includes an EMLSR mode field and an EMLMR mode field. Furthermore, when the Non-AP MLD operates in the EMLMR mode, the enhanced multi-link control field further includes an EMLMR Link Bitmap field and an EMLMR Parameter Update Control field.

The multi-link operation update request frame response frame includes a third information field for indicating the EMLMR parameter to be updated. The third information field includes a first information sub-field and a second information sub-field. The first information sub-field indicates the minimum MAC padding delay of the initial frame in the EMLMR mode, and the second information sub-field indicates the minimum delay for the EMLMR link to transition from the frame exchange state to the monitoring state in the EMLMR mode.

In this case, the multi-link operation update response frame may include at least one of the first information field or the third information field.

Moreover, the first information field in the multi-link operation update response frame may include an enhanced multi-link control field which may include an EMLSR mode field and an EMLMR mode field.

Moreover, when the Non-AP MLD operates in the EMLMR mode, and the multi-link operation update response frame includes an enhanced multi-link control field, the enhanced multi-link control field may include at least one of an EMLMR Link Bitmap field or an EMLMR Parameter Update Control field.

Moreover, when the multi-link operation update response frame includes a third information field, the third information field may include at least one of the first information sub-field or the second information sub-field.

The communication method of the embodiments of the present disclosure may include the above steps and at least one of the embodiments. For example, step S61 or step S62 may be implemented as an independent embodiment, and steps S61-S62 may be implemented as an independent embodiment, which however is not limited thereto.

FIG. 7 is a structural diagram of a Non-AP MLD according to an embodiment of the present disclosure. As shown in FIG. 7, the Non-AP MLD 700 may include a processing module 701 and a transceiver module 702.

In some embodiments, the processing module 701 is configured to determine a multi-link operation update request frame on a first condition, wherein the multi-link operation update request frame includes a first information field configured to indicate status information of an enhanced multi-link mode of the Non-AP MLD, and the enhanced multi-link mode includes an enhanced multi-link single radio (EMLSR) mode or an enhanced multi-link multi-radio (EMLMR) mode.

The transceiver module 702 is configured to send the multi-link operation update request frame to an AP MLD.

Optionally, the transceiver module 702 is configured to execute at least one of the sending and receiving steps (e.g., step S21, step S32, step S42, but not limited thereto) performed by the Non-AP MLD in any of the above methods, which are not repeated herein. The processing module 701 is configured to execute at least one processing step (e.g., steps S23-S29, step S31, step S41, steps S43-S49, but not limited thereto) performed by the Non-AP MLD in any of the above methods.

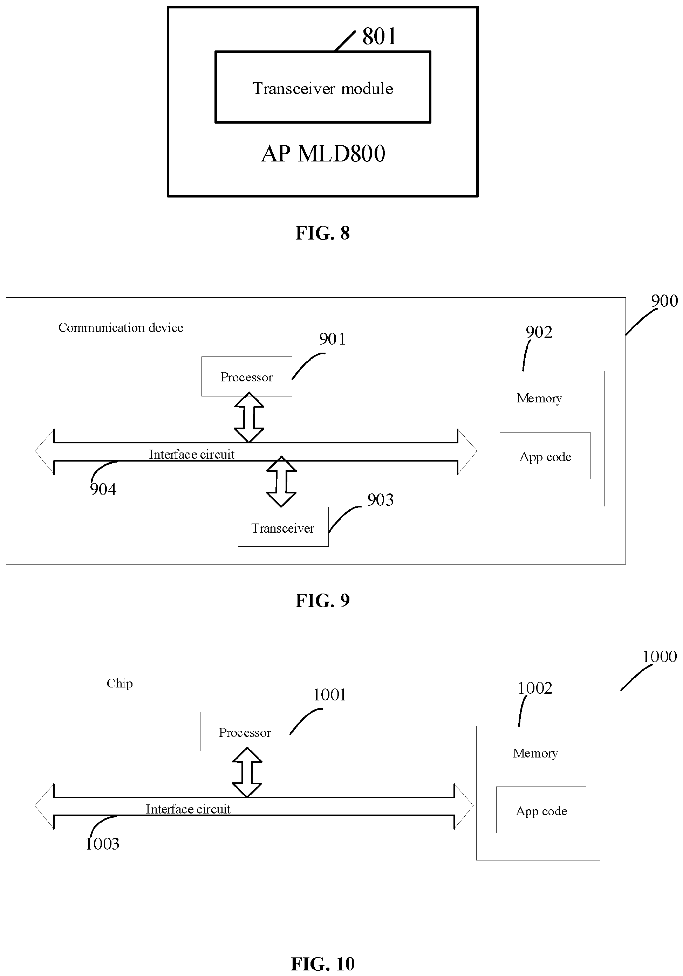

FIG. 8 is a structural diagram of an AP MLD according to an embodiment of the present disclosure. As shown in FIG. 8, the AP MLD 800 may include a transceiver module 801.

In some embodiments, the transceiver module 801 is configured to receive a multi-link operation update request frame, wherein the multi-link operation update request frame includes a first information field configured to indicate status information of an enhanced multi-link mode of a Non-AP MLD, the enhanced multi-link mode includes an EMLSR mode or an EMLMR mode, and the multi-link operation update request frame is determined and sent by the Non-AP MLD on a first condition.

Optionally, the transceiver module 801 is configured to execute at least one of the sending and receiving steps (e.g., step S22, step S51, steps S61-S62, but not limited thereto) performed by the AP MLD in any of the above methods, which is not repeated herein.

It should be understood that the division of the above respective units or modules represents a logical functional partitioning. In practical implementation, these units or modules may be all or partially integrated into a single physical entity, or physically separated. Furthermore, the unit or module may be implemented in a form in which a processor invokes software. For example, a processor is included, and the processor is connected to a memory having instructions stored thereon. The processor invokes the instructions stored in the memory to implement any of the above methods or the function of each of the above units or modules. The processor may be a general-purpose processor, such as a central processing unit (CPU) or microprocessor. The memory may be a memory within or outside the device. Alternatively, the unit or module within the device may be implemented in a form of a hardware circuit, and the function of some or all units or modules may be achieved by designing the hardware circuit. Such hardware circuit may be understood as one or more processors. For example, in an implementation, the hardware circuit may be an application-specific integrated circuit (ASIC), and the function of some or all units or modules may be achieved by designing the component logical relationship within the circuit. For another example, in another implementation, the above hardware circuit may be implemented through a programmable logic device (PLD). Taking a Field Programmable Gate Array (FPGA) as an example, it may include a substantial number of logic gate circuits, and by configuring the connection between these logic gate circuits via a configuration file, the function of some or all of the above units or modules may be achieved. All units or modules of the above device may be implemented entirely in the form in which a processor invokes software, entirely in the form of hardware circuit, or partially in the form in which the processor invokes software with the remaining portion implemented in the form of hardware circuit.

In an embodiment of the present disclosure, the processor is a circuit having a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may implement certain functions through the logical relationship of hardware circuit. The above logical relationship of hardware circuit is fixed or reconfigurable. For example, the processor is a hardware circuit implemented by application-specific integrated circuit (ASIC) or programmable logic device (PLD), such as FPGA. Within a reconfigurable hardware circuit, the processor loads a configuration file to implement hardware circuit configuration, which process may be understood as that the processor loads instructions to implement the function of some or all of the above units or modules. Furthermore, it may be a hardware circuit designed for artificial intelligence, which may be understood as an ASIC, such as Neural Network Processing Unit (NPU), Tensor Processing Unit (TPU), or Deep Learning Processing Unit (DPU).

FIG. 9 is a structural diagram of a communication device 900 according to an embodiment of the present disclosure. The communication device 900 may be a Non-AP MLD or an AP MLD, and may also be a chip, a chip system, a processor or the like supporting a Non-AP MLD or an AP MLD to implement any of the above methods. The communication device may be configured to implement the method described in the above method embodiments, details of which may refer to the descriptions in the method embodiments.

As shown in FIG. 9, the communication device 900 includes one or more processors 901. The processor 901 may be a general-purpose processor or a dedicated processor, such as a baseband processor or a central processer. The baseband processor may be configured to process communication protocol and communication data, and the central processor may be configured to control a communication device (such as base station, baseband chip, terminal device, terminal device chip, DU or CU, etc.), execute program, and process program data. The communication device 900 is configured to execute any of the above methods.

In some embodiments, the communication device 900 further includes one or more memories 902 for storing instructions. Optionally, all or part of the memories 902 may also be located outside the communication device 900.

In some embodiments, the communication device 900 further includes one or more transceivers 903. Where the communication device 900 includes one or more transceivers 903, the transceiver(s) 703 performs at least one of the communication steps such as sending step and/or receiving step (e.g., steps S21-S22, S32, S42, S51, S61-S62, which however is not limited thereto) in the above methods, and the processor 901 performs at least one of other steps (e.g., steps S31, S41, S43-S49, which however is not limited thereto).

In some embodiments, the transceiver may include a receiver and/or a sender, and the receiver and the sender may be separate or integrated. Optionally, the terms transceiver, transceiver unit, transceiver machine, transceiver circuit, etc. may be used interchangeably; the terms sender, sending unit, sending machine, sending circuit, etc. may be used interchangeably; and the terms receiver, receiving unit, receiving machine, receiver circuit, etc. may be used interchangeably.

In some embodiments, the communication device 900 may include one or more interface circuits 904. Optionally, the interface circuit 904 is connected to the memory 902, and the interface circuit 904 may be configured to receive signals from the memory 902 or other devices, and may be configured to send signals to the memory 902 or other devices. For example, the interface circuit 904 may read instructions stored in the memory 902 and send these instructions to the processor 901.

The communication device 900 described in the above embodiments may be a Non-AP MLD or AP MLD, but the scope of the communication device 900 described herein is not limited thereto. The structure of the communication device 900 may not be limited by FIG. 9. The communication device may be a standalone device or part of a large device. For example, the communication device may be: (1) an independent integrated circuit (IC), chip, chip system, or subsystem; (2) an assembly including one or more ICs, optionally including storage components for data and programs; (3) an ASIC, such as a modem; (4) a module embeddable within other devices; (5) a receiver, terminal device, smart terminal device, cellular telephone, wireless device, handheld device, mobile unit, in-vehicle device, network device, cloud device, artificial intelligence device, etc.; (6) other devices, etc.

FIG. 10 is a structural diagram of a chip 1000 according to an embodiment of the present disclosure. The chip 1000 includes one or more processors 1001, and is configured to execute any of the above methods.

In some embodiments, the chip 1000 further includes one or more interface circuits 1003. Optionally, the interface circuit 1003 is connected to a memory 1002. The interface circuit 1003 may be configured to receive signals from the memory 1002 or other devices, and may be configured to send signals to the memory 1002 or other devices. For example, the interface circuit 1003 may read instructions stored in the memory 1002 and send these instructions to the processor 1001.

In some embodiments, the interface circuit 1003 performs at least one of the communication steps such as sending step and/or receiving step (e.g., steps S21-S22, S32, S42, S51, S61- S62, which however is not limited thereto) in the above methods, and the processor 1001 performs at least one of other steps (e.g., steps S31, S41, S43- S49, which however is not limited thereto).

In some embodiments, the terms such as interface circuit, interface, transceiver pin, transceiver, etc., may be used interchangeably.

In some embodiments, the chip 1000 further includes one or more memories 1002 for storing instructions. Optionally, all or part of the memories 1002 may reside outside the chip 1000.

The present disclosure further provides a storage medium having instructions stored thereon. The above instructions, when executed on the communication device 900, cause the communication device 900 to perform any one of the above methods. Optionally, the above storage medium is an electronic storage medium. Optionally, the above storage medium is a computer-readable storage medium, which however is not limited thereto; and it may also be a storage medium readable by other devices. Optionally, the above storage medium may be a non-transitory storage medium, which however is not limited thereto and may also be a transitory storage medium.

The present disclosure further provides a program product which, when executed by the communication device 900, causes the communication device 900 to perform any one of the above methods. Optionally, the program product is a computer program product.

The present disclosure further provides a computer program which, when executed on a computer, causes the computer to perform any one of the above methods.

The above description is intended to illustrate merely preferred embodiments of the present disclosure and the employed technical principles. Those skilled in the art will appreciate that the scope of the present disclosure is not limited to the technical solution formed by the specific combinations of technical features described above, and may also include other technical solutions formed by any combination of the above technical features or their equivalents without departing from the concept of the present disclosure, for example, technical solutions formed by substituting the above features with technical features disclosed herein (but not limited to) having similar functions.

## Claims

1. A communication method, comprising:
determining, by a Non-AP MLD, a multi-link operation update request frame on a first condition, wherein the multi-link operation update request frame comprises a first information field configured to indicate status information of an enhanced multi-link mode of the Non-AP MLD, and the enhanced multi-link mode comprises an enhanced multi-link single radio, EMLSR, mode or an enhanced multi-link multi-radio, EMLMR, mode; and
sending, by the Non-AP MLD, the multi-link operation update request frame to an AP MLD.

2. The method according to claim 1, wherein the first condition further comprises at least one of:
in a case where the Non-AP MLD operates in the enhanced multi-link mode, a new communication link being enabled between the Non-AP MLD and the AP MLD; or
in a case where the Non-AP MLD operates in the enhanced multi-link mode, at least one enabled communication link of the Non-AP MLD in the enhanced multi-link mode being disabled.

3. The method according to claim 1, further comprising:
when the Non-AP MLD receives, within a transition timeout, a multi-link operation update response frame sent by the AP MLD, or fails to receive the multi-link operation update response frame within the transition timeout, performing, by the Non-AP MLD, a link update for the enhanced multi-link mode.

4. The method according to claim 3, wherein the multi-link operation update response frame comprises the first information field, the first information field comprises an enhanced multi-link control field, and the enhanced multi-link control field comprises an EMLSR mode field and an EMLMR mode field; and
wherein the EMLSR mode field indicates with a first value that the Non-AP MLD operates in the EMLSR mode, and the EMLMR mode field indicates with a second value that the Non-AP MLD operates in the EMLMR mode.

5. The method according to claim 4, wherein the enhanced multi-link control field further comprises an EMLSR parameter update control field or an EMLMR parameter update control field; and
wherein the EMLSR parameter update control field indicates, with a third value, performing EMLSR parameter update, and the EMLMR parameter update control field indicates, with a fourth value, performing EMLMR parameter update.

6. The method according to claim 5, wherein when the EMLSR parameter update control field indicates performing the EMLSR parameter update, the multi-link operation update request frame and the multi-link operation update response frame further comprise a second information field configured to indicate an EMLSR parameter to be updated; and
when the EMLMR parameter update control field indicates performing the EMLMR parameter update, the multi-link operation update request frame and the multi-link operation update response frame further comprise a third information field configured to indicate an EMLMR parameter to be updated.

7. The method according to claim 6, wherein the EMLMR parameter to be updated comprises at least one of:
a minimum media access control padding delay of an initial frame in the EMLMR mode; or
a minimum delay for an EMLMR link to transition from a frame exchange state to a monitoring state in the EMLMR mode,
wherein the third information field indicates, with a first information sub-field, the minimum media access control padding delay of the initial frame in the EMLMR mode, and indicates, with a second information sub-field, the minimum delay for the EMLMR link to transition from the frame exchange state to the monitoring state in the EMLMR mode.

8. The method according to claim 4, wherein performing, by the Non-AP MLD, the link update for the enhanced multi-link mode comprises:
when the Non-AP MLD operates in the EMLSR mode, performing, by the Non-AP MLD, an EMLSR link update based on an EMLSR link indicated by an EMLSR link bitmap field; and
when the Non-AP MLD operates in the EMLMR mode, performing, by the Non-AP MLD, an EMLMR link update based on an EMLMR link indicated by an EMLMR link bitmap field.

9. The method according to claim 5, further comprising:
when the enhanced multi-link control field comprises the EMLSR parameter update control field, and the EMLSR parameter update control field indicates, with the third value, performing the EMLSR parameter update, performing, by the Non-AP MLD, the EMLSR parameter update; and
when the enhanced multi-link control field comprises the EMLMR parameter update control field, and the EMLMR parameter update control field indicates, with the fourth value, performing the EMLMR parameter update, performing, by the Non-AP MLD, the EMLMR parameter update.

10. The method according to claim 6, further comprising:
when the multi-link operation update response frame comprises the second information field, performing, by the Non-AP MLD, the EMLSR parameter update based on the EMLSR parameter to be updated; and
when the multi-link operation update response frame comprises the third information field, performing, by the Non-AP MLD, the EMLMR parameter update based on the EMLMR parameter to be updated.

11. A communication method, comprising:
receiving, by an AP MLD, a multi-link operation update request frame, wherein the multi-link operation update request frame comprises a first information field configured to indicate status information of an enhanced multi-link mode of a Non-AP MLD, the enhanced multi-link mode comprises an EMLSR mode or an EMLMR mode, and the multi-link operation update request frame is determined and sent by the Non-AP MLD on a first condition.

12. The method according to claim 11, wherein the first condition further comprises at least one of:
in a case where the Non-AP MLD operates in the enhanced multi-link mode, a new communication link being enabled between the Non-AP MLD and the AP MLD; or
in a case where the Non-AP MLD operates in the enhanced multi-link mode, at least one enabled communication link of the Non-AP MLD in the enhanced multi-link mode being disabled.

13. The method according to claim 12, further comprising:
sending, by the AP MLD, a multi-link operation update response frame to the Non-AP MLD within a transition timeout; or
not sending, by the AP MLD, the multi-link operation update response frame within the transition timeout.

14. The method according to claim 13, wherein the multi-link operation update response frame comprises the first information field, the first information field comprises an enhanced multi-link control field, and the enhanced multi-link control field comprises an EMLSR mode field and an EMLSR mode field; and
wherein the EMLSR mode field indicates with a first value that the Non-AP MLD operates in the EMLSR mode, and the EMLMR mode field indicates with a second value that the Non-AP MLD operates in the EMLMR mode.

15. The method according to claim 14, wherein the enhanced multi-link control field further comprises an EMLSR parameter update control field or an EMLMR parameter update control field; and
wherein the EMLSR parameter update control field indicates, with a third value, performing EMLSR parameter update, and the EMLMR parameter update control field indicates, with a fourth value, performing EMLMR parameter update.

16. The method according to claim 15, wherein when the EMLSR parameter update control field indicates performing the EMLSR parameter update, the multi-link operation update request frame and the multi-link operation update response frame further comprise a second information field configured to indicate an EMLSR parameter to be updated; and
when the EMLMR parameter update control field indicates performing the EMLMR parameter update, the multi-link operation update request frame and the multi-link operation update response frame further comprise a third information field configured to indicate an EMLMR parameter to be updated.

17. The method according to claim 16, wherein the EMLMR parameter to be updated comprises at least one of:
a minimum media access control padding delay of an initial frame in the EMLMR mode; or
a minimum delay for an EMLMR link to transition from a frame exchange state to a monitoring state in the EMLMR mode,
wherein the third information field indicates, with a first information sub-field, the minimum media access control padding delay of the initial frame in the EMLMR mode, and indicates, with a second information sub-field, the minimum delay for the EMLMR link to transition from the frame exchange state to the monitoring state in the EMLMR mode.

18. A Non-AP MLD, comprising:
a processing module, configured to determine a multi-link operation update request frame on a first condition, wherein the multi-link operation update request frame comprises a first information field configured to indicate status information of an enhanced multi-link mode of the Non-AP MLD, and the enhanced multi-link mode comprises an enhanced multi-link single radio, EMLSR, mode or an enhanced multi-link multi-radio, EMLMR, mode; and
a transceiver module, configured to send the multi-link operation update request frame to an AP MLD.

19. An AP MLD, comprising:
a transceiver module, configured to receive a multi-link operation update request frame, wherein the multi-link operation update request frame comprises a first information field configured to indicate status information of an enhanced multi-link mode of a Non-AP MLD, the enhanced multi-link mode comprises an EMLSR mode or an EMLMR mode, and the multi-link operation update request frame is determined and sent by the Non-AP MLD on a first condition.

20. A Non-AP MLD, comprising:
one or more processors,
wherein the Non-AP MLD is configured to perform the communication method according to any one of claims 1 to 10.

21. An AP MLD, comprising:
one or more processors,
wherein the AP MLD is configured to perform the communication method according to any one of claims 11 to 17.

22. A communication system comprising a Non-AP MLD and an AP MLD, wherein the Non-AP MLD is configured to implement the communication method according to any one of claims 1-10, and the AP MLD is configured to implement the communication method according to any one of claims 11-17.

23. A storage medium having instructions stored thereon that, when executed on a communication device, cause the communication device to perform the communication method according to any one of claims 1-10 or claims 11-17.
